(19)

**Europäisches Patentamt**
**European Patent Office**
**Office européen des brevets**

(11) **EP 4 001 377 B1**

(12) **EUROPEAN PATENT SPECIFICATION**

(45) Date of publication and mention
of the grant of the patent:
**29.11.2023 Bulletin 2023/48**

(51) International Patent Classification (IPC):
*C09K 17/04* *(2006.01)* *E01C 7/36* *(2006.01)*
*E01C 3/04* *(2006.01)* *E01C 21/00* *(2006.01)*

(21) Application number: **21202349.3**

(22) Date of filing: **13.10.2021**

(52) Cooperative Patent Classification (CPC):
**C09K 17/04; E01C 3/04; E01C 7/36; E01C 21/00**

(54) **A METHOD OF PREPARING A CONSTRUCTION SITE AND SOIL STABILIZER**

VERFAHREN ZUR VORBEREITUNG EINER BAUSTELLE UND BODENSTABILISATOR

PROCÉDÉ DE PRÉPARATION D'UN SITE DE CONSTRUCTION ET STABILISATEUR DE SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2020 DK PA202070777**

(43) Date of publication of application:
**25.05.2022 Bulletin 2022/21**

(73) Proprietor: **RGS Nordic A/S**
**2300 Copenhagen S (DK)**

(72) Inventors:
• **NAAMANSEN EBBE, Tubæk**
**2300 Copenhagen S (DK)**
• **BARSØE, Søren**
**2300 Copenhagen S (DK)**

(74) Representative: **Plougmann Vingtoft a/s**
**Strandvejen 70**
**2900 Hellerup (DK)**

(56) References cited:
**JP-A- 2001 048 634    JP-A- 2007 204 974
JP-A- 2018 002 914**

**Description**

**TECHNICAL FIELD**

The invention relates to preparation of a construction site for a construction as well a prepared construction site. More specifically the invention is directed to a method of preparing a construction site for a construction to be located on the construction site and the obtained prepared construction site.

**BACKGROUND ART**

Preparation of a construction site is essential for ensuring a solid foundation for the construction. A constructor will usually obtain a geotechnical report comprising an analysis of the constructing site including a test of the soil and optionally content of water and organic material and other information that may be relevant.

Often the soil does not provide sufficiently stable conditions. This may result in that a new construction site may be found. Alternatively, large amounts of soil may be excavated and transported to a different place, which may be both time consuming and costly.

In order to avoid excessive excavating and redeposition of soil with poor stability quality methods of stabilizing the soil have been developed.

For several years cement, such as Portland cement, has been applied as a stabilisation aid for soil. Also, lime, gypsum, fly ash, and polymers have been suggested as stabilization aids.

WO2016/130144 describes a method of stabilizing soil by admixing into soil from the course of the soil structure (a) calcium oxide, (b) at least one of cement kiln dust, limestone kiln dust, fly ash, or cement, (c) a polymer binder for soil that is substantially gravelly, or liquid glass if the soil contains substantial quantities of pozzolanic material, and (d) water. The admixed soil is compacted into a roadbed or other soil structure of predetermined dimensions. After a predetermined amount of time, the liquid sodium metasilicate will catalyse hardening of the admixture if the soil contains sands or substantial quantities of pozzolans, otherwise the binder will cause hardening of the soil.

JP2018002914 describes a method of casting a foundation, using a ground improving additive for suppressing occurrence of liquefaction, which is a phenomenon often occurring in case of earthquake. The ground improving additive comprises a hydraulic material, primarily cement and aggregates, where the aggregates are ground concrete and slag aggregate and where the aggregate-cement volume ratio is 3 to 12. The ground concrete aggregates are mainly aggregates larger than 19 mm. Soil is mixed with the ground improving additive in a mass ratio soil/ ground improving additive = 0.15:3.0, compacted and allowed to hardening by the moisture in the ground and the moisture of rainfall, and the strength reaches the practical strength about 4 weeks (28 days) after the construction.

JP2007204974 describes a cement solidified soil composition for casting a foundation containing silty soil, sandy soil, concrete crushed powder, Portland cement, water, and a surfactant, wherein the amount of aggregates of silty soil, sandy soil and concrete crushed powder relative to 1 mass part by cement is 2.5-4.5 mass parts.

**DISCLOSURE OF INVENTION**

Clay particles are the finest of all the soil particles of 2 $\mu$m or less and usually having a sheet-like structure and a very high specific surface area. A clay containing soil may be problematic for several reasons. Often clay containing soil is difficult to drain. Due to the structure of the clay, water molecules may bind to the surface of the clay, thereby making the clay containing soil sticky and unstable. If subjected to dry periods, the clay containing soil may dry out, resulting formations of cracks. The clay containing soil tend to change volume, induced by a processes involving swelling with water and shrinking in dry state. These processes occur in three dimensions. In horizontal plane they are represented by formation of cracks and in vertical plane by vertical movement of soil surface or by formation of local cavities.

An object of the present invention is to provide an effective and relatively fast method of preparing a construction site for a construction comprising stabilizing clay containing soil.

In an embodiment, it is an object to provide a method of preparing a construction site which is relatively simple to perform, and which preferably results in a relatively low or even a negative carbon footprint.

In an embodiment, it is an object to provide a method of preparing a construction site, which is cost effective and provides a construction site with a relative high load-bearing capacity and/or a stable load bearing capacity.

In an embodiment, it is an object to provide a method of preparing a construction site, at a clay containing ground.

In an embodiment, it is an object to provide a method of preparing a construction site and providing a construction at the construction site wherein the method has at least one of the abovementioned qualities.

In an embodiment, it is an object to provide a construction site, which has a relatively high load-bearing capacity and/or a stable load bearing capacity and which at the same time has a relatively low carbon footprint.

In an embodiment, it is an object to provide a soil stabilizer suitable for stabilizing clay containing soil, which soil stabilizer preferably provides a relatively low or even a negative carbon footprint.

The invention is defined in the claims.

These and other objects have been solved by the invention or embodiments thereof as described herein below.

It has been found that the invention or embodiments thereof have a number of additional advantages, which will be clear to the skilled person from the following description.

In an embodiment, the method of preparing a construction site comprises stabilizing a portion of clay containing soil by a method comprising mixing a soil stabilizer with the portion of soil.

The soil stabilizer comprises at least 10 parts by mass of the concrete fragments and cement up to a total mass of up to 3 parts by mass of added cement and residual cement. It has been found that the amount of cement may be much lower or preferably the soil stabilizer is free of added cement. The residual cement is residual uncured cement.

It is very beneficial for several reasons that the soil stabilizer may be provided with low or no content of added cement. First, the use of added cement makes the soil stabilizer more expensive and second, the production of the added cement results in undesired $CO_2$ emission.

Thus, it is preferred that soil stabilizer comprises no more than up to 2.5 parts by mass of added cement per 10 parts by mass of the selected concrete fraction, such as up to 2 part by mass of added cement, such as up to 1.5 part by mass of added cement, such as up to 1 part by mass of added cement, such as up to 0.5 part by mass of added cement, such as up to 0.1 part by mass of added cement per 10 parts by mass selected concrete fraction. As mentioned, it is preferred that no uncured cement is added to or comprised in the soil stabilizer.

The selected concrete fraction comprises the residual cement which has not been exposed to water and thereby not been cured.

The concrete fragments is a selected concrete fraction of crushed concrete, comprising a portion of particles less than 16 mm in particle size determined by sieving, wherein the portion of particles less than 16 mm in particle size is at least 20 % by mass of the selected concrete fraction and wherein the soil stabilizer comprises at least 23 % by mass of the selected concrete fraction of crushed concrete. In an embodiment, the portion of particles less than 16 mm in particle size is as at least 30 % by mass, such as at least 40 % by mass, such as at least 50 % by mass, such as at least 60 % by mass, such as at least 70 % by mass, such as at least 80 % by mass, such as at least 85 % by mass of the selected concrete fraction.

It has been found that the finer particles has a surprisingly high stabilizing effect. In addition, the finer concrete particles may result in a faster carbonation effect as will be explained further below.

The soil stabilizer may further as optional ingredients comprise an amount of lime and an amount of one or more additional ingredients.

In addition, the use of crushed construction concrete as soil stabilization agent ensures a low carbon footprint especially compared with previously used stabilization agents such as cement, lime, gypsum, fly ash and similar.

Additional benefits and applications will be clear to the skilled person from the description and examples below.

It should be emphasized that the term "comprises/comprising" when used herein is to be interpreted as an open term, i.e. it should be taken to specify the presence of specifically stated feature(s), such as element(s), unit(s), integer(s), step(s) component(s) and combination(s) thereof, but does not preclude the presence or addition of one or more other stated features.

Throughout the description or claims, the singular encompasses the plural and the plural encompasses the singular unless otherwise specified or required by the context.

The "an embodiment" should be interpreted to include examples of the invention comprising the feature(s) of the mentioned embodiment.

The term "about" is generally used to include what is within measurement uncertainties. When used in ranges the term "about" should herein be taken to mean that what is within measurement uncertainties is included in the range.

The term "substantially" should herein be taken to mean that ordinary product variances and tolerances are comprised. All features of the invention and embodiments of the invention as described herein, including ranges and preferred ranges, may be combined in various ways within the scope of the invention, unless there are specific reasons not to combine such features.

Unless other is specified or clear from the context, any properties, ranges of properties and/or determination(s) are given at 1 atmosphere and 25 °C.

Unless other is specified or clear from the context, any amounts or percentages are by mass.

The term "cement" is used herein to designate "hydraulic cement", wherein the hydraulic cement is in uncured state unless otherwise specified or clear from the context.

The term "residual cement" means uncured cement remaining in the concrete and thereby in the crushed concrete.

The terms "selected fraction of crushed concrete" and "selected concrete fraction are used interchangeable.

The method of preparing a construction site comprises crushing at least one element of construction concrete. The element of concrete may for example be a left over element e.g. from the production of a concrete construction and/or concrete elements previously used in a construction or similar. The element of concrete may be large or small.

The phrase "at least one element of concrete" is herein used to mean that one or more elements may be applied. Larger element of concrete may for example be pre-crushed to smaller element of concrete prior to be finally crushed to obtain a desired selected fraction of crushed concrete. Hence, the crushing may comprise one or more steps of crushing. The concrete that is applied in the method is advantageously a relatively dense concrete.

Advantageously, the fraction of crushed concrete has a density of at least 1500 kg/m$^3$. Thereby a very effective and fast stabilization of the soil may be obtained.

In an embodiment, the fraction of crushed concrete has a density of at least 1500 kg/m$^3$, such as at least 1600 kg/m$^3$, such as at least 1800 kg/m$^3$, such as at least 2000 kg/m$^3$ determined in oven-dried condition.

In an embodiment, the fraction of crushed concrete has a density of from 400 kg/m$^3$ to 1500 kg/m$^3$, such as from 400 kg/m$^3$ to 1500 kg/m$^3$.

The density of the selected fraction of the crushed construction concrete is determined dry condition of the crushed concrete in oven-dried condition, where it is dried to constant mass. The oven drying may be performed at any desired oven temperature, such as for example 50 - 100 °C e.g. about 50 °C.

Generally, the term "dry condition" as used herein is preferably an oven dried condition to constant mass as described above.

Unless otherwise specified all mass indications for materials are for the materials in dry condition.

The selected fraction of the crushed concrete may advantageously be obtained by sieving. In case the amount of the selected fraction is not sufficient, additional element(s) of concrete may be crushed or the already crushed concrete may be crushed even further.

The selected fraction of crushed construction concrete comprises particles with sizes up to a cut off size. The cut off size is selected in dependence of the degree of stabilization desired, the condition and type of soil to be stabilized. This will be further described below.

The particle sizes of the selected fraction and the cut off size is determined by sieving. The particle sizes of the selected fraction are advantageously determined while the particles are in dry condition, such as oven dried at 50 °C.

Advantageously, the method comprises providing the soil stabilizer comprising

- obtaining and crushing at least one element of concrete;
- obtaining the selected fraction of the crushed concrete; and

wherein the selected fraction of crushed concrete comprises particles with sizes up to the cut off size as mentioned above. Preferably the fraction of crushed concrete has a density as mentioned above.

Preferably the cut off size of the selected fraction of crushed concrete is 20 mm or less, such as 18 mm or less, such as 16 mm or less, such as 14 mm or less, such as 12 mm or less, such as 10 mm or less, such as 8 mm or less, such as 6 mm or less, such as 4 mm or less, said selected fraction is preferably obtained by sieving.

In an embodiment, the method of preparing a construction site comprises

- crushing at least one element of construction concrete;
- obtaining a selected fraction of the crushed construction concrete; and
- stabilizing the portion of soil using the selected fraction of crushed construction concrete.

Thereby the selected fraction of the crushed construction concrete is applied as the soil stabilizer.

The inventors of the present invention have found that by stabilizing soil using a selected fraction of crushed construction concrete a surprising effective stabilization of the soil may be obtained. In addition, this effective stabilization may be obtained rather fast, which result in substantial saving of time for the constructor and work force.

It is believed that upon crushing the element(s) of concrete, larger and smaller stones and aggregates are crushed to smaller aggregates including particles with more angular shapes than uncrushed aggregates. At the same time the crushing results in exposing non-hydrated cement. It is believed that both the more angular shapes and the exposed non-hydrated cement add to the surprisingly fast stabilization effect of the stabilizer. Especially it has been found that the fraction of crushed concrete particles of relatively small size, such as 20 mm or less, such as 16 mm or less, such as 4 mm or less comprises a relatively high amount of exposed residual cement compared to the total amount of crushed concrete, which result is a relatively fast absorption of water from the portion of clay containing soil, which add to the fast stabilization.

Advantageously, the amount of the residual cement is up to 10 % by mass of the selected concrete fraction, such as from 0.5 to 5 % by mass of the selected concrete fraction, such as from 1 to 3 % of the selected concrete fraction.In an embodiment, the stabilizer comprises up to 3 parts by mass of lime, per 1 part by mass of selected concrete fraction, such as up to 2.5 parts by mass of lime, such as up to 2 parts by mass of lime, such as up to 1.5 parts by mass of lime, such as up to 1 part by mass of lime, such as up to 0.5 part by mass of lime per 1 part by mass of selected concrete fraction. The lime may be hydrated lime or burnt lime (calcium oxide). Preferably the lime is burnt lime.

In an embodiment, the soil stabilizer is free of added lime.Where the portion of clay containing soil comprises a substantial amount of silt particles (having particle size larger than 2 μm and up to 6 μm) it may be desired that the soil stabilizer comprises lime.

The soil stabilizer may be produced by a method comprising mixing the selected fraction of crushed concrete with one or more of the above mentioned added cement, lime and/or additional elements.

In an embodiment, the soil stabilizer is composed from the selected fraction of crushed concrete, up to the 3 parts by mass of added cement per 10 parts by mass of concrete fragments, up to 3 parts by mass of lime, per 1 part by mass of selected concrete fraction and up to 2 parts by mass of at least one additional ingredients per 1 part by mass of selected concrete fraction. The selected concrete fraction may comprise up to 10 % by mass of residual uncured cement.

In an embodiment, the soil stabilizer comprises up to 1 parts by mass of additional ingredient(s) per 1 part by mass of selected concrete fraction, such as up to 0.5 parts by mass of additional ingredients(s), such as up to 0.4 parts by mass of additional ingredient(s), such as up to 0.3 parts by mass of additional ingredient(s), such as up to 0.2 parts by mass of additional ingredient(s), such as up to 0.1 parts by mass of additional ingredient(s), such as up to 0.05 parts by mass of additional ingredient(s).

Generally, it is desired to keep the amount of additional ingredient(s) as low as possible.

The additional ingredient(s) may advantageously be selected from gypsum, magnesia, alumina, iron oxides, polymer binder, bentonite, slag aggregates, fly ash, basalt and silica.

The slag aggregates may e.g. comprise steel slag

Preferably the additional ingredient(s) is selected from magnesia, alumina, iron oxides, bentonite, blast furnace slag and fly ash.

Advantageously, the soil stabilizer comprises less than 5 % by mass of slag aggregate, such as less than 2 % by mass of slag aggregate. Preferably no slag aggregate is added to the soil stabilizer. Whereas slag aggregates are often beneficial for use as aggregate in concrete or cement where it is embedded in the hardened concrete or cement, it is desired to avoid slag aggregate in the soil stabilizer, because the fractions, such as polluting fractions, of the slag aggregates of the stabilized clay containing soil may be washed out and eventually end up in the ground water.

Conveniently, the soil stabilizer comprises at least 25 % by mass of the selected concrete fraction, such as at least 30 % by mass of the selected concrete fraction, such as at least 40 % by mass of the selected concrete fraction, such as at least 50 % by mass of the selected concrete fraction, such as at least 60 % by mass of the selected concrete fraction, such as at least 70 % by mass of the selected concrete fraction, such as at least 80 % by mass of the selected concrete fraction, such as at least 85 % by mass of the selected concrete fraction, such as at least 90 % by mass of the selected concrete fraction, such as at least 95 % by mass of the selected concrete fraction, such as at least 97 % by mass of the selected concrete fraction, such as at least 99 % by mass of the selected concrete fraction, such as entirely of the selected concrete fraction.

Beneficially, the soil stabilizer is entirely or nearly entirely, such as > 90 %, such as > 95 % by mass of the selected concrete fraction.

The soil stabiliser may be provided in one single portion or it may be provided in two or more separate portions which may be different or identical.

In an embodiment, where the soil stabilizer comprises at least one of added cement, lime and/or additional ingredient(s), the soil stabilizer may be provided in two or more portions, such as a portion comprising the selected concrete fraction and one or more portions comprising the respective added cement, lime and/or additional ingredient(s).

Advantageously, for simple handling it is desired that the soil stabilizer is applied in mixed form where the soil stabilizer comprises at least one of added cement, lime and/or additional ingredient(s).

To ensure an effective crushing, the element(s) of concrete should advantageously be at least partly cured prior to crushing. Preferably, the construction concrete is cured to a state enabling crushing of both aggregates and binder, which advantageously should be at least partly hardened for obtaining an effective crushing. The binder, also referred to as the hydraulic binder is mainly of cement, but may also comprise small amounts of additive.

It has been found that a large part of the binder will be crushed to relatively small particle, while simultaneously exposing uncured cement fractions.

The curing may start as soon as the concrete is stiffened and it may continue for months, depending on the amount and type of binder, moisture content, thickness of concrete, temperature among other. In particular, temperature is important and the curing rate is practically linear with the temperature within normal in-door and out-door temperatures, such as in the temperature range from 0 to 40 °C.

The concrete is conveniently cured to a curing state corresponding to at least 12 hours at 20 °C, such as to a curing state corresponding to at least 24 hours at 20 °C, to a curing state corresponding to at least 2 days at 20 °C, such as to a curing state corresponding to at least 4 days at 20 °C.

The curing stage of concrete is often referred to as the maturity of the concrete.

In an embodiment, the element(s) of concrete has cured for at least 24 hours, such as at least one week, such as at least 2 weeks, such as at least 3 weeks, such as at least 4 weeks.

Normally a construction concrete will have fully cured after 4 weeks at 20 °C. At higher temperature, the curing goes faster and at lower temperature the curing will go slower. For a given concrete, a curing rate versus temperature curve may be provided e.g. by performing a few curing tests. The degree of curing is equivalent with the degree of compressive strength of the construction concrete. When the compressive strength of the construction concrete has reached its maximum, i.e. it is not increasing further determined over e.g. 24 hours at 20 °C, then the construction concrete is considered fully cured.

The element(s) of concrete may conveniently have a water content of 10 % by mass or less prior to crushing. The water content may be determined by oven drying to constant mass. Where the water content is higher, it may be difficult to effectively crush the element(s) of concrete.

Advantageously, the element(s) of concrete has a water content of 5 % by mass or less, such as a water content of 4 % by mass or less, such as a water content of 3 % by mass or less, such as a water content of 2 % by mass or less, such as a water content of 1 % by mass or less prior to the crushing thereof.

A very beneficial aspect of the invention is that the element(s) of concrete may be concrete that has been applied in a previous construction or which are left over concrete elements e.g. residual concrete from production of a concrete construction. These already used elements of concrete or residual concrete elements may then be applied for a new and beneficial use as soil stabilizer with all the benefits as described herein. In addition, it may save builders disposal and/or transport cost and generally it may improve the circular economy in respect of reducing carbon emissions and exploitation of natural resources.

The use of concrete element(s) may in an embodiment be element(s) of concrete that has cured to at least 90 % of full strength - i.e. cure to a decree where the compression strength has reached at least 90 % of its maximum.

The concrete may for example be obtained from demolished concrete structures.

The concrete element(s) may for example have served as a part of a previous construction, such as a pavement, a building, a bridge etc.

It is known to use concrete e.g. as aggregates road gravel, revetments, retaining walls, landscaping gravel, or raw material for new concrete.

However, heretofore it has never been considered to use fractions of concrete according to the present invention. The effectiveness obtained by the various embodiments of the invention is highly surprising and open for increased recycling of concrete and thus a reduction in carbon emission.

The amount by mass of cement in the element(s) of concrete should advantageously not increase the amount by mass of aggregates. Thus, for a very effective stabilization both the aggregates and the cement are important factors as it will be further described below. Especially it has been found that the uncured cement in the fraction of crushed concrete comprised in the stabilized soil induces a very effective carbonation reaction, which result in that $CO_2$ is absorbed from the air and bound in the stabilized soil, thereby providing an effective $CO_2$ uptake from the air, which thereby may result in a negative $CO_2$ footprint.

It is believed that the carbonation is the result of the dissolution of $CO_2$ at the surface of the particles of the fraction of crushed concrete followed by reaction with for example calcium from calcium hydroxide and/or calcium silicate hydrate to form calcite ($CaCO_3$). The dissolution of the $CO_2$ at the surface of the particles requires the presence of water molecules. It has been found that very small amounts of water, such as the amount which will always be present in soil e.g. due to the contact with air during the mixing with the fraction of crushed concrete, may be sufficient.

The concrete element comprises binder, usually in the form of cement optionally with small amounts of additive components, such as up to 5 % by mass, usually less than 1 % by mass of the binder.

Advantageously the amount by mass of cement in cured and uncured stage in the element(s) of concrete is usually up to 40 % by mass, preferably up to 30 % by mass, such as up to about 25 % by mass, such as up to about 20 % by mass. The uncured part of the cement, is referred to as the residual cement.

Unless otherwise specified or clear from the context all mass measurements are measurements on the dry matter, e.g. over dried at 50 °C to constant mass.

In an embodiment, the at least one element of concrete comprises at least 25 % by mass of aggregates. The aggregates may conveniently be selected from sand, stone and a mixture thereof. Preferably, the element(s) of concrete comprises at least 40 % by mass of the aggregates, such as at least 50 % by mass of the aggregates, such as at least 60 % by mass of the aggregates.

Advantageously, the element(s) of concrete has a density of 1500 kg/m$^3$ or more, such as at least 1700 kg/m$^3$, such as at least 1800 kg/m$^3$, such as at least 2000 kg/m$^3$, such as at least 2200 kg/m$^3$.

The high density of the concrete ensures that the resulting fraction of crushed concrete will also have a relative high density as described above, which ensures that the stabilization of soil becomes very effective.

Advantageously, the aggregates of the element(s) of concrete may then conveniently have an average density of 1800 kg/m$^3$ or more, such as 2000 kg/m$^3$ or more, such as at least 2100 kg/m$^3$, such as at least 2200 kg/m$^3$, such as at least 2300 kg/m$^3$.

In an embodiment, a lighter concrete is applied, such as concrete element(s) having a density in the range of 400 kg/m$^3$ to 1500 kg/m$^3$, such as 800 kg/m$^3$ to 1100 kg/m$^3$. The aggregate may advantageously comprise aggregates comprises stone, preferably comprising at least one of granite, limestone, trap rock, basalt, dolomite or sandstone.

The stone may be crushed stone. Crushed stone may e.g. be obtained from breaking down of large rocks in a stone crushing machine.

Gravel is a natural product of weathering and erosion. It may be collected from riverbeds or extracted form gravel pits.

Crushed stone usually has more angular surfaces than gravel as a result of the crushing process, whereas gravel is more rounded.

Generally, it is desired that the cut off size of the selected fraction of crushed concrete is 20 mm or less. It has been found that the stabilization of the soil thereby will be both fast and effective.

Also as explained above, the carbonation reaction is believed to takes place at the surface of the particles of the fraction of crushed concrete, thus the smaller the particles, the more effective will the carbonation be.

As explained above the carbonation reaction providing an effective $CO_2$ uptake from the air and result in formation of calcium carbonate. It is believed that the calcium carbonate binds to the clay particles in the soil and thereby increases the stabilization of the soil. Thus, the more clay in the soil, the more are the carbonation reaction increasing the stabilization of the soil.

In an embodiment, the cut off size of the selected fraction of crushed concrete is 18 mm or less, such as 16 mm or less, such as 14 mm or less, such as 12 mm or less.

Advantageously, the cut off size of the selected fraction of crushed concrete is 10 mm or less, such as 8 mm or less, such as 6 mm or less, such as 4 mm or less.

In an embodiment, the selected concrete fraction comprises a portion having less than 4 mm in particle size, wherein the portion having less than 4 mm in particle size is at least 5 % by mass of the selected concrete fraction, such as at least 10 % by mass of the selected concrete fraction, such as at least 20 % by mass of the selected concrete fraction, such as at least 30 % by mass of the selected concrete fraction, such as at least 40 % by mass of the selected concrete fraction, such as at least 50 % by mass of the selected concrete fraction, such as at least 60 % by mass of the selected concrete fraction, such as at least 70 % by mass of the selected concrete fraction, such as at least 80 % by mass of the selected concrete fraction, such as at least 90 % by mass of the selected concrete fraction, preferably the portion of the selected concrete fraction having less than 4 mm in particle size is from 8 % to 95 % by mass.

Advantageously, 90 % - 100% of the portion of the selected concrete fraction having 4 mm or less in particle size

In an embodiment, it is desired that the fraction of crushed concrete comprises a particle distribution comprising both relatively small and relatively large particles.

It has been found that the relatively small particles has a double effect in the stabilization of the soil, in that these relatively small particles increases the specific surface area and thus the carbonation reaction and further it has been found that these relatively small particles ensures a very fast water uptake, which has been found to result is a surprisingly fast stabilization of the soil.

In an embodiment, the element(s) of concrete comprises aggregates comprising a first portion of coarse aggregate larger than 4 mm e.g. a portion retained on a sieve with mesh size 4 mm, and a second portion of fine aggregate less than 4 mm e.g. a portion passing the sieve with mesh size 4 mm.

In an embodiment, the fraction of crushed concrete comprises a first portion of coarse particles larger than 4 mm e.g. a portion retained on a sieve with mesh size 4 mm, and a second portion of fine particles less than 4 mm e.g. a portion passing the sieve with mesh size 4 mm.

Soil is generally defined as the upper layer of earth in which plants may grow, a black or dark brown material typically consisting of a mixture of organic remains, clay, and rock particles which may be more or less physical and chemical decomposed.

Soil may vary largely and naturally the desired fraction of crushed concrete may therefore depend on the soil to be stabilized. Soil may be classified into four types:

- Sandy soil.
- Silty soil.
- Clay soil.
- Loam soil.

Sandy soil may consist of small particles of weathered rock. Sandy soils are one of the poorest types of soil for growing plants because it has very low nutrients and poor water holding capacity. Sandy soil is usually formed by the breakdown or fragmentation of rocks like granite, limestone and quartz.

Silty soil may have much smaller particles compared to sandy soil and is made up of rock and other mineral particles, which are smaller than sand and larger than clay. It is the smooth and fine quality of the soil that holds water better than sand.

Clay soil is the smallest particle amongst the other types of soil. The particles in this soil are tightly packed together with each other with very little or no pore space. This soil has very good water storage qualities and makes it hard for moisture and air to penetrate into it. It is very sticky to the touch when wet. As mentioned above clay containing soil does not drain well and tend to change volume, induced by a processes involving swelling with water and shrinking in dry state, resulting in formation of cracks.

Loam soil is a balanced combination of sand, silt and optionally clay and humus. This soil is also referred to as an agricultural soil.

Advantageously, the clay containing soil to be stabilized has a particle size distribution comprising at least 8 % by mass below 2 $\mu$m, such as at least 10 % by mass, such as at least 12 % by mass, such as at least 14 % by mass, such as at least 16 % by mass, such as at least 18 % by mass, such as at least 20 % by mass below 2 $\mu$m.

Advantageously, the portion of clay containing soil has a particle size distribution comprising less than 50 % by mass of particles with a particle size in the range of from 2 $\mu$m to 0.06 mm, such as less than 55 % by mass, such as less than 50 % by mass less, such as less than 40 % by mass less, such as less than 30 % by mass less of sand particles with a particle size in the range of from 2 $\mu$m-0.06 mm.

A large amount of silty soil, is generally not desired, however where such relatively large amount of silt is present, the soil stabilizer may advantageously comprise lime such as described above. For example the soil stabilizer may comprise 1 % by mass of lime for each 5 % above 30 % of silt.

In an embodiment, the the portion of clay containing soil has a particle size distribution comprising 20-70 % of sand particles of particle size in the range of 0.06 mm to 2 mm, such as at least 30 %, such as at least 35 % by mass.

In an embodiment, the the portion of clay containing soil comprises up to 10 % by mass of humus, such as up to 5 % by mass. Advantageously, the portion of clay containing soil comprises less than 1 % by weight of humus, such as essentially no humus.

Where the portion of clay containing soil comprises humus, it may be desired that the soil stabilizer comprises added cement.

In an embodiment, the portion of clay containing soil has a particle size distribution comprising less than 25 % by mass of particles with a particle size larger than 1 mm, such as less than 20 % by mass, such as less than 15 % by mass less, such as less than 10 % by mass of particles with a particle size larger than 1 mm.

Clay containing soil of the above type is very common and as mentioned it is often very problematic to provide a stable ground, where such clay containing soil is present. Prior to this invention, the standard solution in case of such clay containing soil has been to excavate the clay containing soil from the area to be stabilized and replacing it with sand, gravel and/or cement.

The soil stabilizer as defined in the claims and described herein, thereby provides a very beneficial and valuable.

It has been found that the relatively large and medium particles in addition to the above effects also ensures a physical stabilization of the soil.

The crushing of the element(s) of concrete has been found to also result in crushed at least some of the stones of the aggregate. It has been found that many of the particles of the fraction of crushed concrete comprises fraction(s) of crushed stones of the aggregate, wherein the fractions have various angular shapes. It has been found that these angular shapes of aggregate fractions in the fraction of crushed concrete ensures an even more effective stabilization. In addition, the stabilization effect of the angular shapes of aggregate fractions in the fraction of crushed concrete is instantaneously, which thereby ensures an even faster stabilization of the soil.

In an embodiment, the at least one element of concrete comprises aggregates comprising a portion of large aggregates, wherein the large aggregates having particle sizes measured by sieving, which are larger than 0.8 times the cut off size of the selected fraction, preferably the large aggregates having particle sizes measured by sieving, which are larger than the cut off size of the selected fraction.

Thus, the aggregate fractions in the fraction of crushed concrete may be increased.

The crushing may for example be provided using a cone crusher, an impact crusher or preferably a jaw crusher. The crushing process may generate dust, however, generally the crushed concrete is much less dusty than for example cement.

In an embodiment, the step of crushing the element(s) of concrete comprises crushing at least a portion of the aggregates of the concrete. Preferably, the step of crushing comprises crushing the element(s) of concrete to obtain crushed concrete particles wherein at least 20 % by mass of the crushed concrete particles having particle sizes below the cut off size of the selected fraction. Thereby it may be ensured that the fraction of crushed concrete comprises a desired amount of particles comprising fractions of crushed aggregates.

Preferably, at least 30 % by mass, such as at least 40 % by mass, such as at least 50 % by mass, such as at least 60 % of the crushed concrete particles having particle sizes below the cut off size of the selected fraction.

In an embodiment, the step of crushing the element(s) of concrete, comprises crushing at least 5 % by mass of the aggregates of the concrete having particle size larger than the cut off size, such as at least 10 % by mass, such as at least 20 % by mass, such as at least 30 % by mass, of the aggregates of the concrete having particle size larger than the cut off size.

In an embodiment, the selected fraction of crushed concrete comprises less than 5 % by mass of particles larger than 0.9 times the cut off size, such as less than 5 % by mass of particles larger than 0.8 times the cut off size, such as less than 5 % by mass of particles larger than 0.7 times the cut off size.

In an embodiment, the selected fraction of crushed concrete comprises at least 10 % by mass, such as at least 20 % by mass of particles having sizes larger than 0 and up to 4 mm.

Advantageously the selected fraction of the crushed concrete has particles of from larger than zero and up to the cut off size, which may advantageously be 10 mm, or less e.g. 4-10 mm.

Advantageously the selected fraction of the crushed concrete has a particle size profile (distribution over the range from larger than zero to the cut off size) which is relatively straight, meaning that substantially all sizes of particles in the range from larger than zero, such as from 1 $\mu$m to the maximal particle size are present.

The particle size profile may advantageously be selected in dependence on the soil to be stabilized and the type and requirements of the construction site.

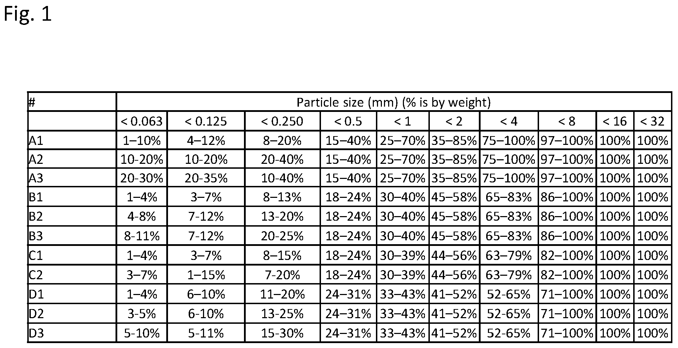

Examples of particle size profiles of the selected fraction of crushed concrete particles are shown in figure 1.

Advantageously, the stabilizing of the portion of soil comprises mixing the portion of soil with the soil stabilizer, which may consist of the selected fraction of the crushed concrete or optionally comprises other ingredients as described elsewhere herein. The mixing is advantageously performed to provide an evenly distribution of the soil stabilizer in the portion of soil or to provide a plurality of portions of stabilized soil with different relative soil stabilizer content, evenly distributed in the respective portions of stabilized soil.

Thus the stabilized soil may comprise two or more portions of stabilized soil with different amount of fraction of crushed concrete and/or with particles of different fractions of soil stabilizer comprising crushed concrete e.g. obtained from different type of element(s) of concrete and/or having different cut off sizes and/or particle size profile.

The phrase "evenly distribution of the soil stabilizer in the portion of soil" is herein used to mean that the content of crushed concrete in one m$^3$ volume of the stabilized soil differs less than 20 %, preferably less than 10 % by mass of concrete relative to another one m$^3$ volume of the same mixture.

The optimal amount of the soil stabilizer and/or the fraction of crushed concrete for stabilizing a given portion of soil may vary, however it has been found that even small relative amounts of the fraction of crushed concrete in the clay containing soil may have a good stabilizing effect.

In an embodiment, the stabilizing of the portion of soil comprises mixing the portion of soil with a proportion of at least 0.2 parts by dry mass of the soil stabilizer and/or the selected fraction of the crushed concrete to 100 parts by mass of soil of the portion of soil.

In an embodiment, the stabilizing of the portion of soil comprises mixing the soil portion with a proportion of at least 0.5 parts by dry mass of the soil stabilizer, comprising or consisting of the selected fraction of the crushed concrete to 100 parts by mass of soil, such as a proportion of at least 1 part by dry mass of the selected fraction of the crushed concrete to 100 parts by mass of soil, such as a proportion of 1-100 parts by dry mass of the selected fraction of the crushed concrete to 100 parts by mass of soil, such as a proportion of at 2-75 parts by dry mass of the selected fraction of the crushed concrete to 100 parts by mass of soil, such as a proportion of 5-50 parts by dry mass of the selected fraction of the crushed concrete to 100 parts by mass of soil.

The mixing of the soil stabilizer and the soil may be performed at any desired location. It may be performed manually or using machinery for the mixing. The desired location for the mixing step and the method of performing the mixing, depend largely on the amount of soil of the soil portion to be stabilized.

In an embodiment, the stabilizing of the portion of soil is at least partly performed in situ at the construction size. This may be advantageous where the soil to be stabilized is already present at the construction site. Thus, it is not required to transport the soil to a remote mixing location.

The mixing may e.g. be performed by spreading the selected fraction of the crushed concrete onto a surface of the construction site and thereafter mixing to a desired depth using suitable machinery.

In an embodiment, the step of mixing the soil with the soil stabilizer, comprising or consisting of the selected fraction of the crushed concrete is at least partly performed at a location distinct from the construction site, such as a location adjacent to the construction site or a location further from the construction site. In an embodiment, the step of mixing the soil with the selected fraction of the crushed concrete is at least partly performed at a location remote relative to the location site e.g. more than 500 m such as more than 1 km away from the construction site.

The mixing may e.g. be performed in a remote mixing plant or by using a wheel loader or by other suitable methods.

The portion of soil may be soil located at the site prior to the preparation of the construction site or it may be soil obtained from another location.

The method may comprise removing pieces of organic material prior to the step of stabilizing the soil portion and/or depositing stabilized soil. In addition, larger stones or other undesired elements may be removed prior to the step of stabilizing the soil portion and/or depositing stabilized soil. The removal of pieces of organic material may for example include removing vegetation, such a grass, trees etc. In an embodiment, the removal of pieces of organic material comprises removing fallen leaves, a surface layer of the soil, plastic parts and similar. Where the top layer of soil comprises substantially amounts of humus, it may be beneficial to remove such top layer, prior to initiating the stabilization.

The method may advantageously comprise compacting the portion of soil after mixing with the soil stabilizer, comprising or consisting of the selected fraction of the crushed concrete. The compacting may be a manual compacting and/or a compacting using machinery. The compacting may ensure a fast stabilization.

The soil with intermixed soil stabilizer may for example be compacted to obtain a desired degree of saturation, S. The desired degree of saturation, S, may advantageously be at least 30, such as larger than 40, such as larger than 50 %, such as larger than 65 %.

The degree of saturation, S, is defined as the ratio of the volume of water present in a given soil mass to the total volume of voids in it.

The degree of saturation is usually expressed as a percentage and is also known as percent saturation.

$$S = \frac{V_w}{V_a + V_w}$$

Wherein $V_w$ is the volume of water and $V_a$ is the volume of air in the soil.

By compacting the volume of voids is reduced, preferably at least 1 % by total volume of soil, such as 5 % or more by total volume of soil.

The construction site may have any size and depends on the construction to be provided. In an embodiment, construction site has an area of at least 10 m², such as at least 50 m², such as at least 100 m².

The construction site may be a construction site for supporting a construction, such as a construction comprising at least a portion of a road, a building, a fundament and/or a pavement.

Where the construction site is a construction site for supporting a construction, the method may comprise stabilizing one or more layers of soil adapted to support the construction.

The stabilizing of the portion of soil may advantageously be performed to a depth of soil of at least 0.2 m, such as to a depth of at least 0.4 m. In an embodiment, at top layer e.g. up to a depth of 1 mm from a surface of the construction site is not stabilized. Preferably, the soil is stabilized from the surface of the construction site to the mentioned depth.

In an embodiment, the method comprises stabilizing two or more layers of soil, wherein the two or more layers of soil is stabilized using different amount of soil stabilizer, comprising or consisting of the fraction of crushed concrete and/or soil stabilizer, comprising different fraction of crushed concrete as described above.

Advantageously, the method comprises preparing a construction site to have a load-bearing capacity of at least 20 kN/m², such as at least 30 kN/m², such as at least 40 kN/m², such as at least 50 kN/m², such as at least 60 kN/m², such as at least 70 kN/m².

The load-bearing capacity may be determined 3 days after compacting.

In an embodiment, the method comprises preparing a construction site to have an initial load-bearing capacity within 12 hours of at least 10 MPa/m², such as at least 15 kN/m², such as at least 25 kN/m², such as at least 40 kN/m².

It has been found that the soil stabilizer, ensures a very fast stabilizing of the soil portion. Thus a surprisingly fast initial load-bearing capacity may be obtained.

The initial load-bearing capacity may be determined after 12 hours.

Thus, by providing that the construction site is prepared to have a relatively high initial load-bearing capacity, the workers may continue their work on the construction site relatively fast after having prepared the construction site.

The method may advantageously comprise providing a construction at the construction site, wherein the construction is arranged onto and/or into the stabilized soil. The construction may be as mentioned above.

The construction site may be a construction site, where the soil constitutes or forms part of the construction and wherein at least a portion of the construction is formed of the stabilized soil.

Stabilized soil may be used for forming many types of constructions e.g. as described elsewhere herein.

Advantageously, the portion of the construction formed of the stabilized soil has an average layer thickness of at least 1 cm, such as at least 5 cm, such as at least 10 cm, such as at least 20 cm.

In an embodiment, the construction site is or comprises the construction.

The construction may for example comprise a pile of stabilized soil (e.g. forming a noise barrier), a fence of the stabilized soil, a cradle of the stabilized soil and/or a ramp of the stabilized soil.

Generally, it is known to provide such constructions fully or partly of soil. Embodiments of the present invention comprising that the construction is fully or partly of soil and wherein the soil is stabilized soil comprising the fraction of crushed concrete, thereby ensuring very stable and long-lasting constructions, having one or more of the advantages as described herein.

The invention also relates to a soil stabilizer, wherein the soil stabilizer is as defined in claim 11 and comprises at least 23 % by mass of a selected concrete fraction of crushed concrete, wherein the selected concrete fraction comprises a portion of aggregates less than 16 mm in particle size determined by sieving, wherein the portion of aggregates less than 16 mm in particle size is at least 20 % by mass of the selected concrete fraction such as at least 25 % by mass of the selected concrete fraction.

The soil stabilizer may be as described above.

All features of the inventions and embodiments of the invention as described herein including ranges and preferred ranges may be combined in various ways within the scope of the invention, unless there are specific reasons not to combine such features.

BRIEF DESCRIPTION OF EXAMPLES OF EMBODIMENTS OF THE INVENTION

The above and/or additional objects, features and advantages of embodiments of the present invention will be further elucidated by the following illustrative and non-limiting examples and description of embodiments of the present invention, with reference to the appended figures.

The figures are schematic and are not drawn to scale and may be simplified for clarity. Throughout, the same reference numerals are used for identical or corresponding parts.

Figure 1 is a table illustrating examples of particle size distribution for the selected fractions of crushed concrete for the soil stabilizer for stabilizing clay containing soil according to embodiments of the method of the invention.

Figures 2a and 2b show the particle distribution for a specific sample of particle size distribution for the selected fraction of crushed concrete for the soil stabilizer for stabilizing soil according to embodiments of the method of the invention.

Figures 3 -5 show the particle distribution for additional specific samples of particle size distribution for the selected fraction of crushed concrete for the soil stabilizer for stabilizing clay containing soil according to embodiments of the method of the invention.

Figure 6 illustrates a cross sectional view of an example of a construction site which is prepared according to an embodiment of the method of the invention.

Figure 7 illustrates a cross sectional view of an example of a construction site which is prepared according to another embodiment of the method of the invention.

Figure 8 illustrates a cross sectional side view of a construction site comprising a construction in form of a ramp.

Figure 9 illustrates a cross sectional side view of a construction site comprising a construction in form of a road.

Figure 10 illustrates a cross sectional side view of a construction site comprising a construction in form of a cradle.

Figure 11 shows a particle size distribution of a clay containing soil, which beneficially may be stabilized by an embodiment of the method of the invention.

In the following are provided a number of examples of construction sites where the method of preparing the construction site is highly suitable:

- Stabilization of building land in urban buildings.
- Soil stabilization under new railway tracks alongside existing railway tracks.
- Soil stabilization of local road.
- Stabilization of soil in conduits in connection with separate sewerage project.
- Stabilization of soil as backfill in pipe trenches.
- Soil stabilization in connection with construction of a dam.
- Soil stabilization as foundation for a large building, such as a hospital.

Figure 1 show a number of examples of particle size distribution for the selected fraction of crushed concrete.

The examples have been divided into four groups A-D. The four groups of examples have particle sizes in the following ranges:

A: 0-4 mm
B: 0-6 mm
C: 0-8 mm
D: 0-20 mm

The examples with high amount of relatively particles less than 1 mm are particularly good for stabilizing clay soil and/or soil with high water content. Where the water content is low the amount of relatively particles less than 1 mm needs not to be so high.

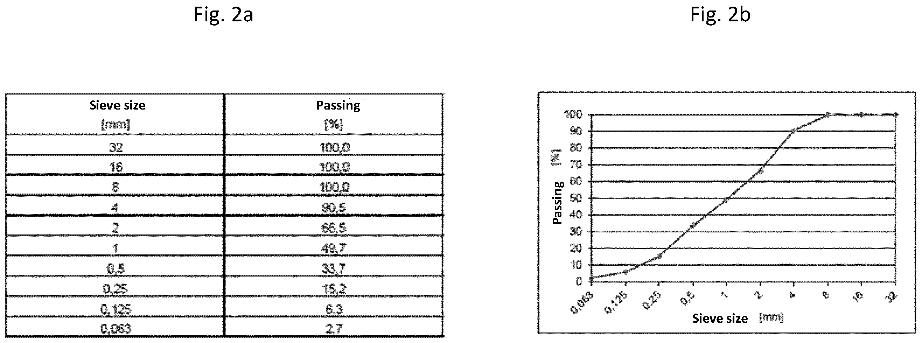

In figure 2a, a sieving result of particle size distribution for a specific example of the selected fraction of crushed concrete, is shown. For each sieve size, the passing of particles in pre cent by mass is given. Figure 2b is a diagram showing the particle distribution of the sample. Density (dry) was determined by a pycnometer to be 2210 kg/m$^3$.

The water absorption $W_a$ was determined according to the formula:

$$Wa = 100\frac{m2 - m1}{m1}$$

where $W_a$ is the water absorption (%), m1 is the dry mass (g), and m2 is the wet mass (g).

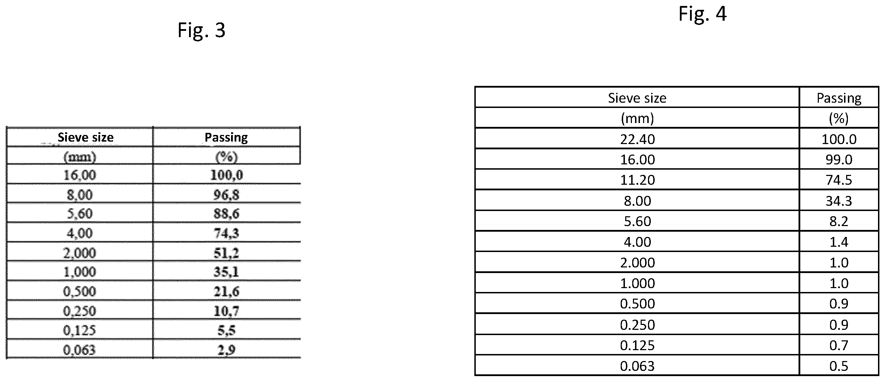

In figure 3, a sieving result of particle size distribution for a specific example of the selected fraction of crushed concrete, is shown. The fraction of larger particles are larger for the example of figure 3, than the example of figures 2a and 2b.

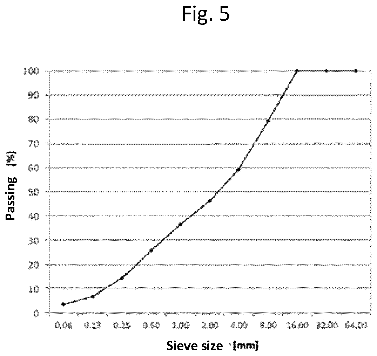

The particle size distribution for the selected fraction of crushed concrete for the example of figure 5 comprises larger particles than the example of figure 3.

In the example of a fraction of crushed concrete illustrated in figure 5, it can be seen that practically all particle sizes up to about 16 mm are represented in the selected fraction. The density (dry) was determined to be 2411 kg/m$^3$ and the water absorption was determined to be 5.18 %.

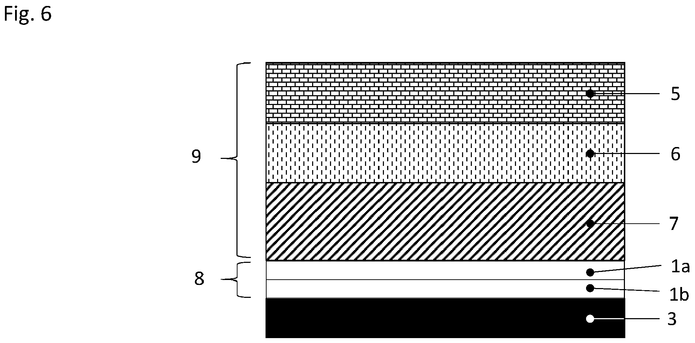

Figure 6 illustrates an example of a construction site for a road, where the construction site comprising stabilized soil, which is stabilized by a soil stabilizer consisting of the fraction of crushed concrete. As it can be seen the foundation of the construction site has been stabilized with several stabilization layers 8 for preparing the construction site for the construction 9. The stabilization layers 8 provides a subbase for the construction 9. The construction 9 is in this example a road construction and depending on the type of road and the load it is designed the layers of the road may vary. In this example the road construction comprises a sub-base 7, a base course 6 and a surface course 5. The sub-base 7, the base course 6 and the surface course 5 are here illustrated with one layer each, however, it should be understood that each of the sub-base 7, the base course 6 and the surface course 5 may individually of each other comprise two or more layers. The sub-base 7 may for example comprise layer(s) of aggregates, sandy soil (e.g. stabilized according to an embodiment of the invention) and mixtures. The base course may for example comprise layer(s) of aggregates, clay soil (e.g. stabilized according to an embodiment of the invention) and mixtures where the particle size profile is selected to provide a good planar foundation for the surface course. The surface course 5 layer(s) are usually bonded layer(s) comprising asphalt, and concrete pavement.

The stabilisation layers 8 may also be referred to as the sub-grade. Below the subgrade is soil 3. In this example the sub-grade comprises a first sub-grade layer 1a and a second sub-grade layer 1b. The sub-grade layers 1a, 1b are layers of stabilized soil, where the soil has been stabilized as described above. In figure 6 the sub-grade layers 1a, 1b are illustrated with same thickness. It should be illustrated that the thickness of the layers may vary individually of each other e.g. as described above.

In an example of the construction site illustrated in figure 6, the construction site comprising stabilized soil, which is stabilized by a soil stabilizer consisting of the fraction of crushed concrete. The sub-grade layer 1a comprises clay soil stabilized by being mixed with 10% of a first selected fraction of crushed concrete and, the sub-grade layer 1b comprises clay soil stabilized by being mixed with 5% of the first selected fraction of crushed concrete or with 5% of a second selected fraction of crushed concrete.

The second selected fraction of crushed concrete may for example have a higher amount of particles with particle size less than 1 mm than the first selected fraction.

In another example of the construction site illustrated in figure 6, the subgrade layer 1a comprises clay soil stabilized by being mixed with 10% of a first selected fraction of crushed concrete and, the sub-grade layer 1b comprises clay soil stabilized by being mixed with 5% of the first selected fraction of crushed concrete or with 5% of a second selected fraction of crushed concrete.

In this example the first selected fraction of crushed concrete may conveniently have a large amount of particles with particle size less than 1 mm to absorb a relative large amount of water from the clay soil.

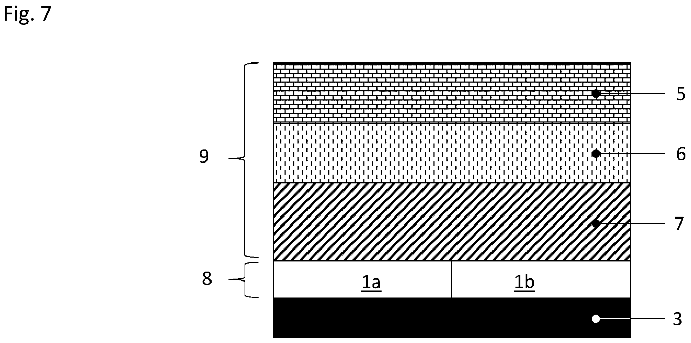

Figure 7 illustrates another example of a construction site for a road. The layers of the construction 9 may be as described for the example of figure 6.

The stabilisation layers are in this example located laterally to each other. For example a first sub-grade layer 1a function to stabilise a first section of the road construction, such as a section comprising a driving lane, and the adjacent second sub-grade layer 1b may function to stabilise a second section of the road construction, such as a section comprising an emergency lane, where the load is expected to be lower that at the driving lane.

The sub-grade layers 1a, 1b may for example be composed of stabilized soil as described for example 6.

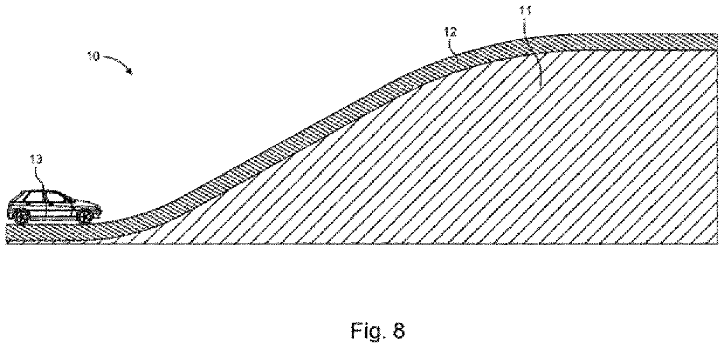

Figure 8 illustrates a cross sectional side view of a construction site comprising a construction in form of a ramp 10. The ramp 10 comprises a main ramp structure 11 of stabilized soil and a layer 12 of asphalt or similar bonded surface layer for providing a stable driving surface for example for a car 13. The stabilized soil is stabilized by being mixed with a selected amount of fraction of crushed concrete as described above. The main ramp structure 11 of stabilized soil is illustrated without multiple layers of stabilized soil having different composition. However, it should be understood that the main ramp structure 11 may comprise to or more layers and/or section of stabilized soil which differs in respect of type of soil, particle size of fraction of crushed concrete and/or amount of fraction of crushed concrete.

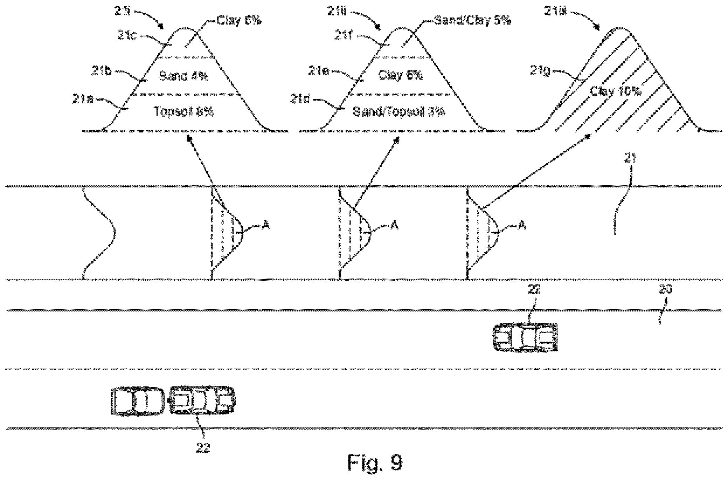

Figure 9 illustrates a cross sectional side view of a construction site comprising stabilized soil, which is stabilized by a soil stabilizer consisting of the fraction of crushed concrete. The construction site comprises a construction in form of a road 20 and along the road a noise barrier 21 in the form of a pile of soil forming a wall along the length of the road 20 to reduce noise from cars 22 driving on the road 20. As illustrated with the arch's A the noise barrier 21 has a cross sectional shape which may or may not differ along the length of the length of the noise barrier 21. Cross sectional views 21i, 21ii, 21iii of three different length sections are illustrated and it can be seen that the three different length sections differs with respect to the soil material providing the respective sections.

In a first section of the noise barrier 21 as illustrated in cross sectional view 21i, the noise barrier 21 comprises, a bottom layer 21a of stabilized soil, a middle layer 21b of stabilized soil and a top layer 21c of stabilized soil.

In a second section of the noise barrier 21 as illustrated in cross sectional view 21ii, the noise barrier 21 comprises, a bottom layer 21d of stabilized soil, a middle layer 21e of stabilized soil and a top layer 21f of stabilized soil.

In a third section of the noise barrier 21 as illustrated in cross sectional view 21iii, the noise barrier 21 is single layer of stabilized soil.

The layers of 21a, 21b, 21c, 21d, 21e, 21f, 21g of stabilized soil may be equal or different in in the respective layers and may be designed to provide a desired stabilization of the noise barrier 21 along its length e.g. in according to meandering of the noise barrier 21 in sideways and up and down directions.

In an example the layers of 21a, 21b, 21c, 21d, 21e, 21f, 21g of stabilized soil are as follows, wherein "topsoil" means the soil obtained from the location i.e. same as below the noise barrier 21 (% by mass):

| 21a | Topsoil stabilized by 8 % fraction of crushed concrete |
| --- | --- |
| 21b | Sandy soil stabilized by 4 % fraction of crushed concrete |
| 21c | Clay soil stabilized by 6 % fraction of crushed concrete |
| 21d | Sandy soil stabilized by 3 % fraction of crushed concrete |
| 21e | Clay soil stabilized by 6% fraction of crushed concrete |
| 21f | Mixture of clay soil and sandy soil (equal mass %) stabilized by 6 % fraction of crushed concrete |
| 21g | Clay soil stabilized by 10% fraction of crushed concrete |

Whereas the barrier 21 may have many different sections along its length, it should be understood that the barrier 21 may be identical along its length or it may haw two, three, four or as many different sections along its length. In this example the soil stabilizer consists of the fraction of crushed concrete.

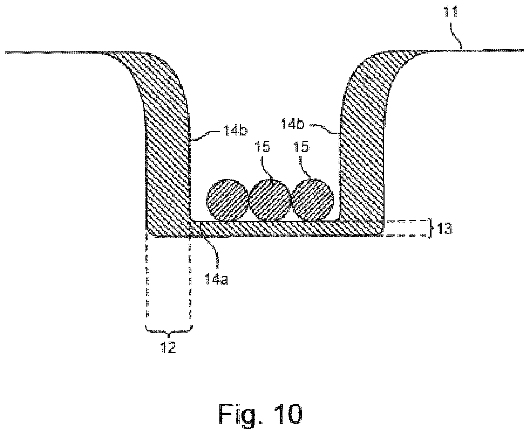

Figure 10 illustrates an example of a construction site comprising a construction in form of a cradle.

The cradle is formed by an excavation downwards from the surface level 11 of the ground. The cradle comprises a bottom surface 14a and two sidewall surfaces 14b extending substantially parallel in the length direction of the cradle.

A thickness portion 12 from the respective sidewall surfaces 14b and a bottom portion 13 from the bottom surface 14a and downwards are of stabilized soil comprising soil stabilized by mixing with a selected fraction of crushed concrete. As described before.

In the cradle, a number of pipes 15 are located and thereby protected by the cradle.

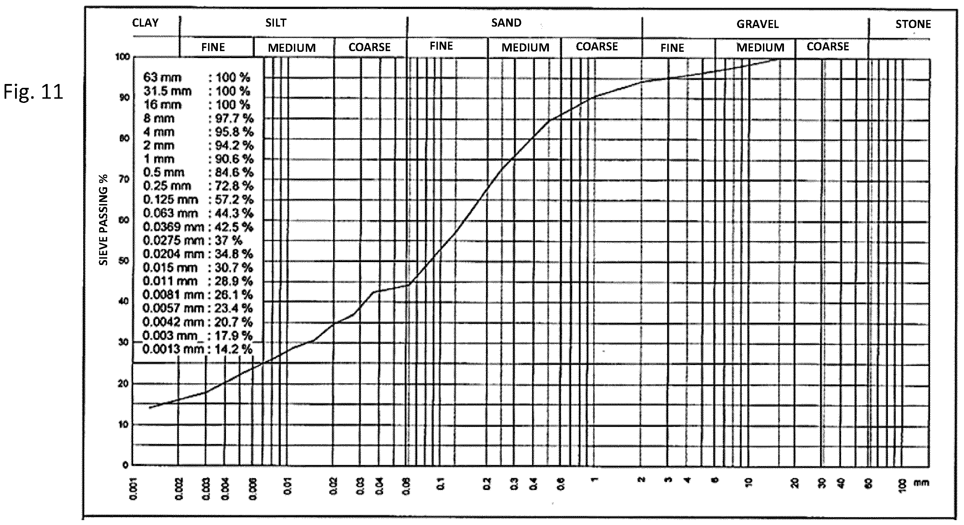

Figure 11 shows a particle size distribution of a clay containing soil, which beneficially may be stabilized by the soil stabilizer. The soil having the shown particle distribution is a very typical soil which prior to the present invention typically would have been stabilized using large amounts of added cement or lime in order to make the soil suitable for use at a construction site. Thanks to the present invention this soil may now be stabilised according to an embodiment of the invention using none or only a relative low amount of added cement or lime. Indeed, a soil stabilizer consisting entirely of the selected concrete fraction as described above would be suitable for stabilizing the soil with the particle size distribution shown in figure 11. A suitable amount of soil stabilizer to stabilizing the soil with the particle size distribution shown in figure 11 may conveniently be about 1-5 % by mass.

*EXAMPLE*

Four different clay containing soil samples are provided. The particle size distributions of the four samples of soil in the form of mass % of clay (Particles < 2 $\mu$m), slit (Particles >2 $\mu$m and < 0.06 mm), sand (Particles > 0.06 mm and < 2mm) and humus (Decomposed organic material) are shown in the below table 1:

Table 1

| Soil sample | CLAY | SLIT | SAND | HUMUS |
|---|---|---|---|---|
| 1 | 15 % | 27 % | 55 % | 3 % |
| 2 | 20 % | 40 % | 35 % | 5 % |
| 3 | 8 % | 60 % | 32 % | 0 % |
| 4 | 10 % | 30 % | 55 % | 5 % |

Three different soil stabilizers of embodiments of the invention are provided having the following composition in mass ratio:

Table 2:

| Soil stabilizer | Selected concrete fraction | Burned lime | Added Cement |
|---|---|---|---|
| A | 10 | 0 | 0 |
| B | 10 | 2 | 0 |
| D | 10 | 0 | 5 |

The selected fraction of concrete is as described above, wherein at least 99 % by mass are of particles < 4 mm.
Stabilization tests are performed by stabilizing portions of each of the soil samples 1, 2, 3 and 4, with respectively 2 %, 3%, 4% and 5% by mass of the respective soil stabilizer A, B and C.
The load bearing capacity are examined after 1 hour and after 28 hours.
The highest load bearing capacity both after 12hours and after 28 hours for each of the four soil samples will be found as follows:

Table 3:

| Soil portion of | Soil Stabilizer | Mass % of Soil Stabilizer |
|---|---|---|
| Sample 1 | A | 3 % |
| Sample 2 | B | 3 % |
| Sample 3 | A | 2 % |
| Sample 4 | D | 5 % |

An embodiment of the present invention relates to a method of preparing a construction site, comprising stabilizing a portion of clay containing soil by a method comprising mixing a soil stabilizer with the portion of soil, wherein the soil stabilizer is as defined in any one of claims 11-15.

**Claims**

1. A method of preparing a construction site, the method comprising stabilizing a portion of clay containing soil by a method comprising mixing a soil stabilizer with the portion of soil, wherein the soil stabilizer comprises at least 10 parts by mass of concrete fragments and cement up to a total mass of up to 3 parts by mass of added cement and residual cement, wherein the cement is hydraulic cement in uncured state, wherein the concrete fragments is a selected concrete fraction of crushed concrete, wherein the selected concrete fraction comprises a portion of particles less than 16 mm in particle size determined by sieving, wherein the portion of particles less than 16 mm in particle size is at least 20 % by mass of the selected concrete fraction and wherein the soil stabilizer comprises at least 23 % by mass of the selected concrete fraction of crushed concrete, preferably the soil stabilizer is essentially free of added cement or comprises up to 2.5 parts by mass of added cement per 10 parts by mass of the selected concrete fraction, and the residual cement is residual uncured cement of the selected fraction, preferably the amount of residual cement is up to 10 % by mass of the selected concrete fraction, such as from 0.5 to 5 % by mass of the selected concrete fraction.

2. The method of any one of the preceding claims, wherein the method comprises providing the soil stabilizer comprising

   • obtaining and crushing at least one element of concrete;
   • obtaining the selected fraction of the crushed concrete; and

   wherein the selected fraction of crushed concrete comprises particles with sizes up to a cut off size of 20 mm or less, preferably the provision of the soil stabilizer comprises mixing the selected fraction of crushed concrete with up to 3 parts by mass of cement, per 10 parts by mass of the selected fraction of crushed concrete, up to 3 parts by mass of lime, per 1 part by mass of the selected concrete fraction, wherein the lime preferably is burnt lime (calcium oxide), preferably no lime is mixed into the selected fraction of crushed concrete.

3. The method of any one of the preceding claims, wherein the soil stabilizer is composed from the selected fraction of crushed concrete, up to the 3 parts by mass of added cement per 10 parts by mass of concrete fragments, up to 3 parts by mass of lime per 1 part by mass of the selected concrete fraction and up to 2 parts by mass of at least one additional ingredient per 1 part by mass of the selected concrete fraction, wherein the selected concrete fraction comprises up to 10 % by mass of residual uncured cement, wherein the additional ingredient(s) preferably is selected from gypsum, magnesia, alumina, iron oxides, polymer binder, bentonite, slag aggregates, such as blast furnace slag, fly ash, basalt and silica or any mixtures thereof.

4. The method of any one of the preceding claims, wherein the soil stabilizer comprises at least 25 % by mass of the selected concrete fraction, such as at least 30 % by mass of the selected concrete fraction, such as at least 40 % by mass of the selected concrete fraction, such as at least 50 % by mass of the selected concrete fraction, such as at least 60 % by mass of the selected concrete fraction, such as at least 70 % by mass of the selected concrete fraction, such as at least 80 % by mass of the selected concrete fraction, such as at least 85 % by mass of the selected concrete fraction, such as at least 90 % by mass of the selected concrete fraction, such as at least 95 % by mass of the selected concrete fraction, such as at least 97 % by mass of the selected concrete fraction, such as at least 99 % by mass of the selected concrete fraction, such as entirely of the selected concrete fraction.

5. The method of any one of the preceding claims, wherein the portion of clay containing soil has a particle size distribution comprising at least 8 % by mass below 2 $\mu$m, up to 50 % by mass of particles with a particle size in the range of from 2 $\mu$m to 0.06 mm, and up to 25 % by mass of particles with a particle size larger than 1 mm, preferably the portion of clay containing soil has a particle size distribution comprising at least 10 % by mass below 2 $\mu$m, up to 40 % by mass of particles with a particle size in the range of from 2 $\mu$m to 0.06 mm and up to 10 % by mass of particles with a particle size of 1 mm or larger.

6. The method of any one of the preceding claims, wherein the selected concrete fraction comprises a portion having less than 4 mm in particle size, wherein the portion having less than 4 mm in particle size is at least 5 % by mass of the selected concrete fraction, such as at least 10 % by mass of the selected concrete fraction, such as at least 20 % by mass of the selected concrete fraction, such as at least 30 % by mass of the selected concrete fraction, such as at least 40 % by mass of the selected concrete fraction, such as at least 50 % by mass of the selected concrete fraction, such as at least 60 % by mass of the selected concrete fraction, such as at least 70 % by mass of the selected concrete fraction, such as at least 80 % by mass of the selected concrete fraction, such as at least 90 % by mass of the selected concrete fraction, preferably the portion of the selected concrete fraction having less than 4 mm in particle size is from 8 % to 95 % by mass, such as 90 to 100 % of the portion of the selected concrete fraction having less than 4 mm in particle size.

7. The method of any one of claims 2-6, wherein the at least one element of concrete comprises at least 25 % by mass of aggregates, selected from sand, stone and a mixtures thereof and, wherein the step of crushing the at least one element of concrete, comprises crushing at least a portion of the aggregates of said concrete, wherein the step of crushing comprises crushing the at least one element of concrete to obtain crushed concrete particles wherein at least 20 % by mass of the crushed concrete particles having particle sizes below said cut off size of said selected fraction, preferably at least 30 % by mass, such as at least 40 % by mass, such as at least 50 % by mass, such as at least 60 % of the crushed concrete particles having particle sizes below said cut off size of said selected fraction.

8. The method of any one of the preceding claims, wherein the stabilizing of the portion of soil comprises mixing the soil with a proportion of at least 0.2 parts by dry mass of said soil stabilizer to 100 parts by mass of soil, such as a proportion of at least 0.5 parts by dry mass of said soil stabilizer to 100 parts by mass of soil, such as a proportion of at least 1 part by dry mass of said soil stabilizer to 100 parts by mass of soil, such as a proportion of 1-100 parts by dry mass of said soil stabilizer to 100 parts by mass of soil, such as a proportion of 2-75 parts by dry mass of said soil stabilizer to 100 parts by mass of soil, such as a proportion of 5-50 parts by dry mass of said selected soil stabilizer to 100 parts by mass of soil.

9. A method of any one of-any one of the preceding claims, wherein the method comprises providing a construction at the construction site, wherein the construction is arranged onto and/or into the stabilized soil, preferably the construction comprises at least a portion of a road, a building, a fundament and/or a pavement.

10. The method of any one of the preceding claims, wherein the construction site is a construction site where the soil at least partly forming part of a construction, preferably wherein at least a portion of the construction is formed of said stabilized soil, preferably the construction comprises a pile of stabilized soil, a fence of said stabilized soil, a cradle of said stabilized soil and/or a ramp of said stabilized soil.

11. A soil stabilizer for stabilizing clay containing soil, wherein the soil stabilizer comprises at least 23 % by mass of a selected concrete fraction of crushed concrete, wherein the soil stabilizer comprises at least 10 parts by mass of the selected concrete fraction of crushed concrete and cement up to a total mass of up to 3 parts by mass of added cement and residual cement, wherein the cement is hydraulic cement in uncured state, wherein, the residual cement is residual uncured cement of the selected fraction, wherein the selected concrete fraction comprises a portion of aggregates less than 16 mm in particle size determined by sieving, wherein the portion of aggregates less than 16 mm in particle size is at least 20 % by mass of the selected concrete fraction, such as at least 25 % by mass of the selected concrete fraction.

12. The soil stabilizer of claim 11, wherein the soil stabilizer comprises at least 25 % by mass of the selected concrete fraction, such as at least 30 % by mass of the selected concrete fraction, such as at least 40 % by mass of the selected concrete fraction, such as at least 50 % by mass of the selected concrete fraction, such as at least 60 % by mass of the selected concrete fraction, such as at least 70 % by mass of the selected concrete fraction, such as at least 80 % by mass of the selected concrete fraction, such as at least 85 % by mass of the selected concrete fraction, such as at least 90 % by mass of the selected concrete fraction, such as at least 95 % by mass of the selected concrete fraction, such as at least 97 % by mass of the selected concrete fraction, such as at least 99 % by mass of the selected concrete fraction, such as entirely of the selected concrete fraction.

13. The soil stabilizer of claim 11 or claim 12, wherein the soil stabilizer comprises cement up to a total mass of up to 2.5 parts by mass of added cement and residual cement per 10 part by mass of the selected concrete fraction, such as up to 2 part by mass of added and residual cement, such as up to 1.5 part by mass of added and residual cement, such as up to 1 part by mass of added and residual cement, such as up to 0.5 part by mass of added and residual cement, such as up to 0.1 part by mass of added and residual cement per 10 parts by mass of the selected concrete fraction, preferably the soil stabilizer is essentially free of added cement.

14. The soil stabilizer of claim 13, wherein the residual cement is residual uncured cement of the selected concrete fraction, wherein the residual cement is up to 10 % by mass of the selected concrete fraction, such as from 0.5 to 5 % by mass of the selected concrete fraction, such as from 1 to 3 % of the selected concrete fraction.

15. The soil stabilizer of any one of claims 11-14, wherein the soil stabilizer comprises up to 3 parts by mass of lime,

per 1 part by mass of the selected concrete fraction and wherein the soil stabilizer comprises up to 1 parts by mass of additional ingredient(s) per 1 part by mass of the selected concrete fraction, wherein the additional ingredient(s) is selected from gypsum, magnesia, alumina, iron oxides, polymer binder, bentonite, slag aggregates, such as blast furnace slag, fly ash, basalt and silica.

16. The soil stabilizer of any one of the preceding claims 11-15, wherein the selected concrete fraction comprises a portion having less than 4 mm in particle size, wherein the portion having less than 4 mm in particle size is at least 5 % by mass of the selected concrete fraction, such as at least 10 % by mass of the selected concrete fraction, such as at least 20 % by mass of the selected concrete fraction, such as at least 30 % by mass of the selected concrete fraction, such as at least 40 % by mass of the selected concrete fraction, such as at least 50 % by mass of the selected concrete fraction, such as at least 60 % by mass of the selected concrete fraction, such as at least 70 % by mass of the selected concrete fraction, such as at least 80 % by mass of the selected concrete fraction, such as at least 90 % by mass of the selected concrete fraction, preferably the portion of the selected concrete fraction having less than 4 mm in particle size is from 8 % to 95 % by mass , such as 90 to 100 % of the portion of the selected concrete fraction having less than 4 mm in particle size.

**Patentansprüche**

1. Verfahren zur Vorbereitung einer Baustelle, wobei das Verfahren das Stabilisieren eines Anteils eines tonhaltigen Bodens durch ein Verfahren umfasst, das das Mischen eines Bodenstabilisators mit dem Anteil des Bodens umfasst, wobei der Bodenstabilisator mindestens 10 Masseteile Betonfragmente und Zement bis zu einer Gesamtmasse von bis zu 3 Masseteilen an zugesetztem Zement und Restzement umfasst, wobei der Zement hydraulischer Zement in unausgehärtetem Zustand ist, wobei die Betonfragmente eine ausgewählte Betonfraktion aus gebrochenem Beton sind, wobei die ausgewählte Betonfraktion einen Anteil von Teilchen mit einer Teilchengröße von weniger als 16 mm, bestimmt durch Sieben, umfasst, wobei der Anteil von Teilchen mit einer Teilchengröße von weniger als 16 mm mindestens 20 Massenprozent der ausgewählten Betonfraktion ist und wobei der Bodenstabilisator mindestens 23 Massenprozent der ausgewählten Betonfraktion aus gebrochenem Beton umfasst, wobei der Bodenstabilisator vorzugsweise im Wesentlichen frei von zugesetztem Zement ist oder bis zu 2,5 Masseteile zugesetzten Zements pro 10 Masseteile der ausgewählten Betonfraktion umfasst, und wobei der Restzement restlicher unausgehärteter Zement der ausgewählten Fraktion ist, wobei die Menge an Restzement vorzugsweise bis zu 10 Massenprozent der ausgewählten Betonfraktion ist, wie z. B. von 0,5 bis 5 Massenprozent der ausgewählten Betonfraktion.

2. Verfahren nach einem der vorhergehenden Ansprüche, wobei das Verfahren, das das Bereitstellen des Bodenstabilisators umfasst, Folgendes umfasst:

   • Erhalten und Brechen von mindestens einem Betonelement;
   • Erhalten der ausgewählten Fraktion des gebrochenen Betons; und

   wobei die ausgewählte Fraktion des gebrochenen Betons Teilchen mit Größen bis zu einer Trenngröße von 20 mm oder weniger umfasst, wobei vorzugsweise die Bereitstellung des Bodenstabilisators das Mischen der ausgewählten Fraktion des gebrochenen Betons mit bis zu 3 Masseteilen Zement pro 10 Masseteile der ausgewählten Fraktion des gebrochenen Betons, bis zu 3 Masseteilen Kalk pro 1 Masseteil der ausgewählten Betonfraktion umfasst, wobei der Kalk vorzugsweise gebrannter Kalk (Calciumoxid) ist, wobei vorzugsweise kein Kalk in die ausgewählte Fraktion des gebrochenen Betons gemischt wird.

3. Verfahren nach einem der vorhergehenden Ansprüche, wobei der Bodenstabilisator aus der ausgewählten Fraktion von gebrochenem Beton, bis zu 3 Masseteilen zugesetztem Zement pro 10 Masseteilen Betonfragmenten, bis zu 3 Masseteilen Kalk pro 1 Masseteil der ausgewählten Betonfraktion und bis zu 2 Masseteilen mindestens eines zusätzlichen Bestandteils pro 1 Masseteil der ausgewählten Betonfraktion zusammengesetzt ist, wobei die ausgewählte Betonfraktion bis zu 10 Massenprozent restlichen unausgehärteten Zements umfasst, wobei der (die) zusätzliche(n) Bestandteil(e) vorzugsweise ausgewählt ist (sind) aus Gips, Magnesia, Aluminiumoxid, Eisenoxiden, polymerem Bindemittel, Bentonit, Schlackenzuschlägen, wie z. B. Hochofenschlacke, Flugasche, Basalt und Siliciumdioxid oder beliebigen Mischungen davon.

4. Verfahren nach einem der vorhergehenden Ansprüche, wobei der Bodenstabilisator mindestens 25 Massenprozent der ausgewählten Betonfraktion umfasst, wie z. B. mindestens 30 Massenprozent der ausgewählten Betonfraktion, wie z. B. mindestens 40 Massenprozent der ausgewählten Betonfraktion, wie z. B. mindestens 50 Massenprozent der ausgewählten Betonfraktion, wie z. B. mindestens 60 Massenprozent der ausgewählten Betonfraktion, wie z. B. mindestens 70 Massenprozent der ausgewählten Betonfraktion, wie z. B. mindestens 80 Massenprozent der ausgewählten Betonfraktion, wie z. B. mindestens 85 Massenprozent der ausgewählten Betonfraktion, wie z. B. mindestens 90 Massenprozent der ausgewählten Betonfraktion, wie z. B. mindestens 95 Massenprozent der ausgewählten Betonfraktion, wie z. B. mindestens 97 Massenprozent der ausgewählten Betonfraktion, wie z. B. mindestens 99 Massenprozent der ausgewählten Betonfraktion, wie z. B. vollständig der ausgewählten Betonfraktion.

5. Verfahren nach einem der vorhergehenden Ansprüche, wobei der Anteil des tonhaltigen Bodens eine Teilchengrößenverteilung hat, die mindestens 8 Massenprozent unter 2 $\mu$m, bis zu 50 Massenprozent an Teilchen mit einer Teilchengröße im Bereich von 2 $\mu$m bis 0,06 mm und bis zu 25 Massenprozent an Teilchen mit einer Teilchengröße von mehr als 1 mm umfasst, wobei der Anteil des Ton, der Boden enthält, vorzugsweise eine Teilchengrößenverteilung hat, die mindestens 10 Massenprozent unter 2 $\mu$m, bis zu 40 Massenprozent an Teilchen mit einer Teilchengröße im Bereich von 2 $\mu$m bis 0,06 mm und bis zu 10 Massenprozent an Teilchen mit einer Teilchengröße von 1 mm oder mehr umfasst.

6. Verfahren nach einem der vorhergehenden Ansprüche, wobei die ausgewählte Betonfraktion einen Anteil, der eine Teilchengröße von weniger als 4 mm hat, umfasst, wobei der Anteil, der eine Teilchengröße von weniger als 4 mm hat, mindestens 5 Massenprozent der ausgewählten Betonfraktion ist, wie z. B. mindestens 10 Massenprozent der ausgewählten Betonfraktion, wie z. B. mindestens 20 Massenprozent der ausgewählten Betonfraktion, wie z. B. mindestens 30 Massenprozent der ausgewählten Betonfraktion, wie z. B. mindestens 40 Massenprozent der ausgewählten Betonfraktion, wie z. B. mindestens 50 Massenprozent der ausgewählten Betonfraktion, wie z. B. mindestens 60 Massenprozent der ausgewählten Betonfraktion, wie z. B. mindestens 70 Massenprozent der ausgewählten Betonfraktion, wie z. B. mindestens 80 Massenprozent der ausgewählten Betonfraktion, wie z. B. mindestens 90 Massenprozent der ausgewählten Betonfraktion, wobei der Anteil der ausgewählten Betonfraktion, der eine Teilchengröße von weniger als 4 mm hat, wie mindestens 8 bis 95 Massenprozent, wie z. B. 90 bis 100 Prozent des Anteils der ausgewählten Betonfraktion, der eine Teilchengröße von weniger als 4 mm hat.

7. Verfahren nach einem der Ansprüche 2 - 6, wobei das mindestens eine Betonelement mindestens 25 Massenprozent an Zuschlagstoffen umfasst, die aus Sand, Stein und deren Mischungen ausgewählt sind, und wobei der Schritt des Brechens des mindestens einen Betonelements das Brechen mindestens eines Anteils der Zuschlagstoffe des Betons umfasst, wobei der Schritt des Brechens das Brechen des mindestens einen Betonelements umfasst, um gebrochene Betonteilchen zu erhalten, wobei mindestens 20 Massenprozent der gebrochenen Betonteilchen Teilchengrößen unterhalb der Trenngröße der ausgewählten Fraktion haben, wobei vorzugsweise mindestens 30 Massenprozent, wie z. B. mindestens 40 Massenprozent, wie z. B. mindestens 50 Massenprozent, wie z. B. mindestens 60 Massenprozent der gebrochenen Betonteilchen, die Teilchengrößen unterhalb der Trenngröße der ausgewählten Fraktion haben.

8. Verfahren nach einem der vorhergehenden Ansprüche, wobei die Stabilisierung des Anteils des Bodens das Mischen des Bodens mit einem Anteil von mindestens 0,2 Trockenmasseteilen des Bodenstabilisators auf 100 Masseteile des Bodens umfasst, wie z. B. ein Anteil von mindestens 0,5 Trockenmasseteilen des Bodenstabilisators auf 100 Masseteile Boden, wie z. B. ein Anteil von mindestens 1 Trockenmasseteil des Bodenstabilisators auf 100 Masseteile Boden, wie z. B. ein Anteil von 1 - 100 Trockenmasseteilen des Bodenstabilisators auf 100 Masseteile Boden, wie z. B. ein Anteil von 2 - 75 Trockenmasseteilen des Bodenstabilisators auf 100 Masseteile Boden, wie z. B. ein Anteil von 5 - 50 Trockenmasseteilen des ausgewählten Bodenstabilisators auf 100 Masseteile Boden.

9. Verfahren nach einem der vorhergehenden Ansprüche, wobei das Verfahren das Bereitstellen eines Bauwerks auf der Baustelle umfasst, wobei das Bauwerk auf und/oder in den stabilisierten Boden angeordnet wird, wobei das Bauwerk vorzugsweise mindestens einen Anteil einer Straße, eines Gebäudes, eines Fundaments und/oder eines Gehwegs umfasst.

10. Verfahren nach einem der vorhergehenden Ansprüche, wobei die Baustelle eine Baustelle ist, auf der der Boden zumindest teilweise einen Teil eines Bauwerks bildet, wobei vorzugsweise zumindest ein Anteil des Bauwerks aus dem stabilisierten Boden gebildet wird, wobei das Bauwerk vorzugsweise einen Haufen aus stabilisiertem Boden, einen Zaun aus dem stabilisierten Boden, eine Hängebühne aus dem stabilisierten Boden und/oder eine Rampe aus dem stabilisierten Boden umfasst.

11. Bodenstabilisator zur Stabilisierung von tonhaltigem Boden, wobei der Bodenstabilisator mindestens 23 Massenprozent einer ausgewählten Betonfraktion aus gebrochenem Beton umfasst, wobei der Bodenstabilisator mindestens 10 Masseteile der ausgewählten Betonfraktion aus gebrochenem Beton und Zement bis zu einer Gesamtmasse von bis zu 3 Masseteilen zugesetztem Zement und Restzement umfasst, wobei der Zement hydraulischer Zement in unausgehärtetem Zustand ist, wobei der restliche Zement restlicher ungehärteter Zement der ausgewählten Fraktion ist, wobei die ausgewählte Betonfraktion einen Anteil von Zuschlagstoffen mit einer Teilchengröße von weniger als 16 mm, bestimmt durch Sieben, umfasst, wobei der Anteil von Zuschlagstoffen mit einer Teilchengröße von weniger als 16 mm mindestens 20 Massenprozent der ausgewählten Betonfraktion ausmacht, wie beispielsweise mindestens 25 Massenprozent der ausgewählten Betonfraktion.

12. Bodenstabilisator nach Anspruch 11, wobei der Bodenstabilisator mindestens 25 Massenprozent der ausgewählten Betonfraktion umfasst, wie z. B. mindestens 30 Massenprozent der ausgewählten Betonfraktion, wie z. B. mindestens 40 Massenprozent der ausgewählten Betonfraktion, wie z. B. mindestens 50 Massenprozent der ausgewählten Betonfraktion, wie z. B. mindestens 60 Massenprozent der ausgewählten Betonfraktion, wie z. B. mindestens 70 Massenprozent der ausgewählten Betonfraktion, wie z. B. mindestens 80 Massenprozent der ausgewählten Betonfraktion, wie z. B. mindestens 85 Massenprozent der ausgewählten Betonfraktion, wie z. B. mindestens 90 Massenprozent der ausgewählten Betonfraktion, wie z. B. mindestens 95 Massenprozent der ausgewählten Betonfraktion, wie z. B. mindestens 97 Massenprozent der ausgewählten Betonfraktion, wie z. B. mindestens 99 Massenprozent der ausgewählten Betonfraktion, wie z. B. vollständig der ausgewählten Betonfraktion.

13. Bodenstabilisator nach Anspruch 11 oder Anspruch 12, wobei der Bodenstabilisator Zement bis zu einer Gesamtmasse von bis zu 2,5 Masseteilen zugesetzten Zements und Restzements pro 10 Masseteilen der ausgewählten Betonfraktion umfasst, wie z. B. bis zu 2 Masseteilen zugesetzten und Restzements, wie z. B. bis zu 1,5 Masseteilen zugesetztem und restlichem Zement, wie z. B. bis zu 1 Masseteil zugesetztem und restlichem Zement, wie z. B. bis zu 0,5 Masseteilen zugesetztem und restlichem Zement, wie bis zu 0,1 Masseteilen zugesetztem und restlichem Zement pro 10 Masseteilen der ausgewählten Betonfraktion, wobei vorzugsweise der Bodenstabilisator im Wesentlichen frei von zugesetztem Zement ist.

14. Bodenstabilisator nach Anspruch 13, wobei der Restzement ein unausgehärteter Restzement der ausgewählten Betonfraktion ist, wobei der Restzement bis zu 10 Massenprozent der ausgewählten Betonfraktion ausmacht, wie z. B. 0,5 bis 5 Massenprozent der ausgewählten Betonfraktion, wie z. B. 1 bis 3 % der ausgewählten Betonfraktion.

15. Bodenstabilisator nach einem der Ansprüche 11 - 14, wobei der Bodenstabilisator bis zu 3 Masseteile Kalk pro 1 Masseteil der ausgewählten Betonfraktion umfasst und wobei der Bodenstabilisator bis zu 1 Masseteil eines (mehrerer) zusätzlicher Bestandteil(e) pro 1 Masseteil der ausgewählten Betonfraktion umfasst, wobei der (die) zusätzliche(n) Bestandteil(e) ausgewählt ist (sind) aus Gips, Magnesia, Aluminiumoxid, Eisenoxiden, polymerem Bindemittel, Bentonit, Schlackenzuschlägen, wie z. B. Hochofenschlacke, Flugasche, Basalt und Siliciumdioxid.

16. Bodenstabilisator nach einem der vorhergehenden Ansprüche 11 - 15, wobei die ausgewählte Betonfraktion einen Anteil, der eine Teilchengröße von weniger als 4 mm hat, umfasst, wobei der Anteil, der eine Teilchengröße von weniger als 4 mm hat, mindestens 5 Massenprozent der ausgewählten Betonfraktion ist, wie z. B. mindestens 10 Massenprozent der ausgewählten Betonfraktion, wie z. B. mindestens 20 Massenprozent der ausgewählten Betonfraktion, wie z. B. mindestens 30 Massenprozent der ausgewählten Betonfraktion, wie z. B. mindestens 40 Massenprozent der ausgewählten Betonfraktion, wie z. B. mindestens 50 Massenprozent der ausgewählten Betonfraktion, wie z. B. mindestens 60 Massenprozent der ausgewählten Betonfraktion, wie z. B. mindestens 70 Massenprozent der ausgewählten Betonfraktion, wie z. B. mindestens 80 Massenprozent der ausgewählten Betonfraktion, wie z. B. mindestens 90 Massenprozent der ausgewählten Betonfraktion, wobei vorzugsweise der Anteil der ausgewählten Betonfraktion, der eine Teilchengröße von weniger als 4 mm hat, 8 bis 95 Massenprozent beträgt, wie z. B. 90 bis 100 Prozent des Anteils der ausgewählten Betonfraktion, der eine Teilchengröße von weniger als 4 mm, hat.

## Revendications

1. Procédé de préparation d'un site de construction, le procédé comprenant le fait de stabiliser une partie de sol contenant de l'argile par un procédé comprenant le fait de mélanger un stabilisateur de sol avec la partie de sol, dans lequel le stabilisateur de sol comprend au moins 10 parties en masse de fragments de béton et du ciment jusqu'à une masse totale de jusqu'à 3 parties en masse de ciment ajouté et de ciment résiduel, dans lequel le ciment est du ciment hydraulique à l'état non durci, dans lequel les fragments de béton consistent en une fraction de béton choisie de béton broyé, dans lequel la fraction de béton choisie comprend une partie de particules ayant une taille de particule inférieure à 16 mm déterminée par tamisage, dans lequel la partie de particules ayant une taille de particule inférieure à 16 mm constitue au moins 20 % en masse de la fraction de béton choisie et dans lequel le stabilisateur de sol comprend au moins 23 % en masse de la fraction de béton choisie de béton broyé, de préférence le stabilisateur de sol est essentiellement exempt de ciment ajouté ou comprend jusqu'à 2,5 parties en masse de ciment ajouté pour 10 parties en masse de la fraction de béton choisie, et le ciment résiduel est du ciment non durci résiduel de la fraction choisie, de préférence la quantité de ciment résiduel constitue jusqu'à 10 % en masse de la fraction de béton choisie, comme de 0,5 à 5 % en masse de la fraction de béton choisie.

2.  Procédé selon l'une quelconque des revendications précédentes, dans lequel le procédé comprend le fait de fournir le stabilisateur de sol comprenant

    • obtenir et broyer au moins un élément de béton ;
    • obtenir la fraction choisie du béton broyé ; et

    dans lequel la fraction choisie de béton broyé comprend des particules ayant des tailles de jusqu'à une taille limite de 20 mm ou moins, de préférence la fourniture du stabilisateur de sol comprend mélanger la fraction choisie de béton broyé avec jusqu'à 3 parties en masse de ciment, pour 10 parties en masse de la fraction choisie de béton broyé, jusqu'à 3 parties en masse de chaux, pour 1 partie en masse de la fraction de béton choisie, dans lequel la chaux est de préférence de la chaux vive (oxyde de calcium), de préférence de la chaux n'est pas incorporée dans la fraction choisie de béton broyé.

3.  Procédé selon l'une quelconque des revendications précédentes, dans lequel le stabilisateur de sol est composé à partir de la fraction choisie de béton broyé, de jusqu'aux 3 parties en masse de ciment ajouté pour 10 parties en masse de fragments de béton, de jusqu'à 3 parties en masse de chaux pour 1 partie en masse de la fraction de béton choisie et de jusqu'à 2 parties en masse d'au moins un ingrédient supplémentaire pour 1 partie en masse de la fraction de béton choisie, dans lequel la fraction de béton choisie comprend jusqu'à 10 % en masse de ciment non durci résiduel, dans lequel l'ingrédient ou les ingrédients supplémentaires sont choisis de préférence parmi le gypse, la magnésie, l'alumine, les oxydes de fer, un liant polymère, la bentonite, les granulats de laitier, tel que du laitier de haut fourneau, les cendres volantes, le basalte et la silice ou des mélanges quelconques de ceux-ci.

4.  Procédé selon l'une quelconque des revendications précédentes, dans lequel le stabilisateur de sol comprend au moins 25 % en masse de la fraction de béton choisie, comme au moins 30 % en masse de la fraction de béton choisie, comme au moins 40 % en masse de la fraction de béton choisie, comme au moins 50 % en masse de la fraction de béton choisie, comme au moins 60 % en masse de la fraction de béton choisie, comme au moins 70 % en masse de la fraction de béton choisie, comme au moins 80 % en masse de la fraction de béton choisie, comme au moins 85 % en masse de la fraction de béton choisie, comme au moins 90 % en masse de la fraction de béton choisie, comme au moins 95 % en masse de la fraction de béton choisie, comme au moins 97 % en masse de la fraction de béton choisie, comme au moins 99 % en masse de la fraction de béton choisie, comme entièrement constitué de la fraction de béton choisie.

5.  Procédé selon l'une quelconque des revendications précédentes, dans lequel la partie de sol contenant de l'argile a une distribution de tailles de particules comprenant au moins 8 % en masse de particules ayant une taille de particule inférieure à 2 $\mu$m, jusqu'à 50 % en masse de particules ayant une taille de particule dans la plage de 2 $\mu$m à 0,06 mm, et jusqu'à 25 % en masse de particules ayant une taille de particule supérieure à 1 mm, de préférence la partie de sol contenant de l'argile a une distribution de tailles de particules comprenant au moins 10 % en masse de particules ayant une taille de particule inférieure à 2 $\mu$m, jusqu'à 40 % en masse de particules ayant une taille de particule dans la plage de 2 $\mu$m à 0,06 mm et jusqu'à 10 % en masse de particules ayant une taille de particule de 1 mm ou plus.

6.  Procédé selon l'une quelconque des revendications précédentes, dans lequel la fraction de béton choisie comprend une partie ayant une taille de particule inférieure à 4 mm, dans lequel la partie ayant une taille de particule inférieure à 4 mm constitue au moins 5 % en masse de la fraction de béton choisie, comme au moins 10 % en masse de la fraction de béton choisie, comme au moins 20 % en masse de la fraction de béton choisie, comme au moins 30 % en masse de la fraction de béton choisie, comme au moins 40 % en masse de la fraction de béton choisie, comme au moins 50 % en masse de la fraction de béton choisie, comme au moins 60 % en masse de la fraction de béton choisie, comme au moins 70 % en masse de la fraction de béton choisie, comme au moins 80 % en masse de la fraction de béton choisie, comme au moins 90 % en masse de la fraction de béton choisie, de préférence la partie de la fraction de béton choisie ayant une taille de particule inférieure à 4 mm constitue de 8 % à 95 % en masse, comme 90 à 100 % de la partie de la fraction de béton choisie ayant une taille de particule inférieure à 4 mm.

7. Procédé selon l'une quelconque des revendications 2-6, dans lequel ledit au moins un élément de béton comprend au moins 25 % en masse de granulats, choisis parmi le sable, la pierre et des mélanges de ceux-ci et dans lequel l'étape de broyage dudit au moins un élément de béton comprend le broyage d'au moins une partie des granulats dudit béton, dans lequel l'étape de broyage comprend le broyage dudit au moins un élément de béton pour obtenir des particules de béton broyé, au moins 20 % en masse des particules de béton broyé ayant des tailles de particules inférieures à ladite taille limite de ladite fraction choisie, de préférence au moins 30 % en masse, comme au moins 40 % en masse, comme au moins 50 % en masse, comme au moins 60 % des particules de béton broyé ayant des tailles de particules inférieures à ladite taille limite de ladite fraction choisie.

8. Procédé selon l'une quelconque des revendications précédentes, dans lequel la stabilisation de la partie de sol comprend mélanger le sol avec une proportion d'au moins 0,2 partie en masse sèche dudit stabilisateur de sol pour 100 parties en masse de sol, comme une proportion d'au moins 0,5 partie en masse sèche dudit stabilisateur de sol pour 100 parties en masse de sol, comme une proportion d'au moins 1 partie en masse sèche dudit stabilisateur de sol pour 100 parties en masse de sol, comme une proportion de 1-100 parties en masse sèche dudit stabilisateur de sol pour 100 parties en masse de sol, comme une proportion de 2-75 parts en masse sèche dudit stabilisateur de sol pour 100 parties en masse de sol, comme une proportion de 5-50 parties en masse sèche dudit stabilisateur de sol choisi pour 100 parties en masse de sol.

9. Procédé selon l'une quelconque des revendications précédentes, dans lequel le procédé comprend fournir une construction au site de construction, dans lequel la construction est disposée sur et/ou dans le sol stabilisé, de préférence la construction comprend au moins une partie d'une route, d'un bâtiment, d'une fondation et/ou d'un pavement.

10. Procédé selon l'une quelconque des revendications précédentes, dans lequel le site de construction est un site de construction où le sol fait au moins partiellement partie d'une construction, de préférence dans lequel au moins une partie de la construction est constituée dudit sol stabilisé, de préférence la construction comprend une pile de sol stabilisé, une barrière dudit sol stabilisé, un berceau dudit sol stabilisé et/ou une rampe dudit sol stabilisé.

11. Stabilisateur de sol destiné à stabiliser un sol contenant de l'argile, dans lequel le stabilisateur de sol comprend au moins 23 % en masse d'une fraction de béton choisie de béton broyé, dans lequel le stabilisateur de sol comprend au moins 10 parties en masse de la fraction de béton choisie de béton broyé et ciment jusqu'à une masse totale de jusqu'à 3 parties en masse de ciment ajouté et de ciment résiduel, dans lequel le ciment est du ciment hydraulique à l'état non durci, dans lequel le ciment résiduel est du ciment non durci résiduel de la fraction choisie, dans lequel la fraction de béton choisie comprend une partie de granulats ayant une taille de particule inférieure à 16 mm déterminée par tamisage, dans lequel la partie de granulats ayant une taille de particule inférieure à 16 mm constitue au moins 20 % en masse de la fraction de béton choisie, comme au moins 25 % en masse de la fraction de béton choisie.

12. Stabilisateur de sol selon la revendication 11, dans lequel le stabilisateur de sol comprend au moins 25 % en masse de la fraction de béton choisie, comme au moins 30 % en masse de la fraction de béton choisie, comme au moins 40 % en masse de la fraction de béton choisie, comme au moins 50 % en masse de la fraction de béton choisie, comme au moins 60 % en masse de la fraction de béton choisie, comme au moins 70 % en masse de la fraction de béton choisie, comme au moins 80 % en masse de la fraction de béton choisie, comme au moins 85 % en masse de la fraction de béton choisie, comme au moins 90 % en masse de la fraction de béton choisie, comme au moins 95 % en masse de la fraction de béton choisie, comme au moins 97 % en masse de la fraction de béton choisie, comme au moins 99 % en masse de la fraction de béton choisie, comme entièrement constitué de la fraction de béton choisie.

13. Stabilisateur de sol selon la revendication 11 ou la revendication 12, dans lequel le stabilisateur de sol comprend du ciment jusqu'à une masse totale de jusqu'à 2,5 parties en masse de ciment ajouté et de ciment résiduel pour 10 parties en masse de la fraction de béton choisie, comme jusqu'à 2 parties en masse de ciment ajouté et de ciment résiduel, comme jusqu'à 1,5 partie en masse de ciment ajouté et de ciment résiduel, comme jusqu'à 1 partie en masse de ciment ajouté et de ciment résiduel, comme jusqu'à 0,5 partie en masse de ciment ajouté et de ciment résiduel, comme jusqu'à 0,1 partie en masse de ciment ajouté et de ciment résiduel pour 10 parties en masse de la fraction de béton choisie, de préférence le stabilisateur de sol est essentiellement exempt de ciment ajouté.

14. Stabilisateur de sol selon la revendication 13, dans lequel le ciment résiduel est du ciment non durci résiduel de la fraction de béton choisie, dans lequel le ciment résiduel constitue jusqu'à 10 % en masse de la fraction de béton choisie, comme de 0,5 à 5 % en masse de la fraction de béton choisie, comme de 1 à 3 % de la fraction de béton choisie.

15. Stabilisateur de sol selon l'une quelconque des revendications 11-14, dans lequel le stabilisateur de sol comprend jusqu'à 3 parties en masse de chaux,

pour 1 partie en masse de la fraction de béton choisie et dans lequel le stabilisateur de sol comprend jusqu'à 1 partie en masse d'ingrédient(s) supplémentaire(s) pour 1 partie en masse de la fraction de béton choisie, dans lequel l'ingrédient/les ingrédients supplémentaire(s) est/sont choisi(s) parmi le gypse, la magnésie, l'alumine, les oxydes de fer, un liant polymère, la bentonite, les granulats de laitier, tel que laitier de haut fourneau, les cendres volantes, le basalte et la silice.

16. Stabilisateur de sol selon l'une quelconque des revendications précédentes 11-15, dans lequel la fraction de béton choisie comprend une partie ayant une taille de particule inférieure à 4 mm, dans lequel la partie ayant une taille de particule inférieure à 4 mm constitue au moins 5 % en masse de la fraction de béton choisie, comme au moins 10 % en masse de la fraction de béton choisie, comme au moins 20 % en masse de la fraction de béton choisie, comme au moins 30 % en masse de la fraction de béton choisie, comme au moins 40 % en masse de la fraction de béton choisie, comme au moins 50 % en masse de la fraction de béton choisie, comme au moins 60 % en masse de la fraction de béton choisie, comme au moins 70 % en masse de la fraction de béton choisie, comme au moins 80 % en masse de la fraction de béton choisie, comme au moins 90 % en masse de la fraction de béton choisie, de préférence la partie de la fraction de béton choisie ayant une taille de particule inférieure à 4 mm constitue de 8 % à 95 % en masse, comme 90 à 100 % de la partie de la fraction de béton choisie ayant une taille de particule inférieure à 4 mm.

# Fig. 1

| # | Particle size (mm) (% is by weight) | | | | | | | | | |
|---|---------|----------|----------|-------|------|------|--------|---------|------|------|
|   | < 0.063 | < 0.125 | < 0.250 | < 0.5 | < 1 | < 2 | < 4 | < 8 | < 16 | < 32 |
| A1 | 1–10% | 4–12% | 8–20% | 15–40% | 25–70% | 35–85% | 75–100% | 97–100% | 100% | 100% |
| A2 | 10-20% | 10-20% | 20-40% | 15–40% | 25–70% | 35–85% | 75–100% | 97–100% | 100% | 100% |
| A3 | 20-30% | 20-35% | 10-40% | 15–40% | 25–70% | 35–85% | 75–100% | 97–100% | 100% | 100% |
| B1 | 1–4% | 3–7% | 8–13% | 18–24% | 30–40% | 45–58% | 65–83% | 86–100% | 100% | 100% |
| B2 | 4-8% | 7-12% | 13-20% | 18–24% | 30–40% | 45–58% | 65–83% | 86–100% | 100% | 100% |
| B3 | 8-11% | 7-12% | 20-25% | 18–24% | 30–40% | 45–58% | 65–83% | 86–100% | 100% | 100% |
| C1 | 1–4% | 3–7% | 8–15% | 18–24% | 30–39% | 44–56% | 63–79% | 82–100% | 100% | 100% |
| C2 | 3–7% | 1–15% | 7-20% | 18–24% | 30–39% | 44–56% | 63–79% | 82–100% | 100% | 100% |
| D1 | 1–4% | 6–10% | 11–20% | 24–31% | 33–43% | 41–52% | 52-65% | 71–100% | 100% | 100% |
| D2 | 3-5% | 6-10% | 13-25% | 24–31% | 33–43% | 41–52% | 52-65% | 71–100% | 100% | 100% |
| D3 | 5-10% | 5-11% | 15-30% | 24–31% | 33–43% | 41–52% | 52-65% | 71–100% | 100% | 100% |

Fig. 2b

| Sieve size [mm] | Passing [%] |
|---|---|
| 32 | 100,0 |
| 16 | 100,0 |
| 8 | 100,0 |
| 4 | 90,5 |
| 2 | 66,5 |
| 1 | 49,7 |
| 0,5 | 33,7 |
| 0,25 | 15,2 |
| 0,125 | 6,3 |
| 0,063 | 2,7 |

Fig. 2a

## Fig. 3

| Sieve size | Passing |
|:---:|:---:|
| (mm) | (%) |
| 16,00 | 100,0 |
| 8,00 | 96,8 |
| 5,60 | 88,6 |
| 4,00 | 74,3 |
| 2,000 | 51,2 |
| 1,000 | 35,1 |
| 0,500 | 21,6 |
| 0,250 | 10,7 |
| 0,125 | 5,5 |
| 0,063 | 2,9 |

## Fig. 4

| Sieve size | Passing |
|:---:|:---:|
| (mm) | (%) |
| 22.40 | 100.0 |
| 16.00 | 99.0 |
| 11.20 | 74.5 |
| 8.00 | 34.3 |
| 5.60 | 8.2 |
| 4.00 | 1.4 |
| 2.000 | 1.0 |
| 1.000 | 1.0 |
| 0.500 | 0.9 |
| 0.250 | 0.9 |
| 0.125 | 0.7 |
| 0.063 | 0.5 |

Fig. 5

Fig. 6

5
6
7
1a
1b
3

9
8

Fig. 7

Fig. 8

Fig. 9

Fig. 10

| | |
|---|---|
| 63 mm | : 100 % |
| 31.5 mm | : 100 % |
| 16 mm | : 100 % |
| 8 mm | : 97.7 % |
| 4 mm | : 95.8 % |
| 2 mm | : 94.2 % |
| 1 mm | : 90.6 % |
| 0.5 mm | : 84.6 % |
| 0.25 mm | : 72.8 % |
| 0.125 mm | : 57.2 % |
| 0.063 mm | : 44.3 % |
| 0.0369 mm | : 42.5 % |
| 0.0275 mm | : 37 % |
| 0.0204 mm | : 34.8 % |
| 0.015 mm | : 30.7 % |
| 0.011 mm | : 28.9 % |
| 0.0081 mm | : 26.1 % |
| 0.0057 mm | : 23.4 % |
| 0.0042 mm | : 20.7 % |
| 0.003 mm | : 17.9 % |
| 0.0013 mm | : 14.2 % |

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016130144 A
- JP 2018002914 B
- JP 2007204974 B